# EUROPÄISCHE PATENTSCHRIFT

(11) **EP 3 682 317 B1**
(45) Veröffentlichungstag und Bekanntmachung des Hinweises auf die Patenterteilung: **17.02.2021**
(21) Anmeldenummer: 19719805.4
(22) Anmeldetag: 18.04.2019
(51) Int. Cl.: G06F 3/041, G06F 3/0354, G06F 21/85, G06F 21/44, G06F 21/71, H04L 9/32

(54) **VERFAHREN ZUM BETRIEB EINER BERÜHRUNGSSENSITIVEN, FLÄCHIGEN EINGABEVORRICHTUNG EINER GESAMTVORRICHTUNG UND GESAMTVORRICHTUNG**
METHOD FOR OPERATING A TOUCH SENSITIVE, FLAT INPUT UNIT OF A DEVICE AND THE DEVICE
PROCÉDÉ DE FONCTIONNEMENT D'ENTRÉE TACTILE SENSIBLE, DISPOSITIF PLAT D'ENTRÉE D'UN DISPOSITIF ET LE DISPOSITIF

(30) Priorität: 27.04.2018 DE 102018206541
(43) Veröffentlichungstag der Anmeldung: 22.07.2020
(73) Patentinhaber: Audi AG, 85045 Ingolstadt (DE)
(72) Erfinder: KLEIN, Markus, 85104 Pförring (DE); ZAWADZKI, Kamil, 81827 München (DE); AHN, Changsup, 85057 Ingolstadt (DE); KRÄMER, Tim, 85117 Eitensheim (DE); BÖSL, Mathias, 85057 Ingolstadt (DE)
(86) Internationale Anmeldenummer: PCT/EP2019/060133
(87) Internationale Veröffentlichungsnummer: WO 2019/206815

(56) Entgegenhaltungen:
- EP-A1- 2 775 421
- US-A1- 2012 303 964

## Beschreibung

Die Erfindung betrifft ein Verfahren zum Betrieb wenigstens einer berührungssensitiven, flächigen Eingabevorrichtung einer Gesamtvorrichtung, wobei die Eingabevorrichtung über eine nachrichtenbasierte Busverbindung mit einer Steuereinrichtung der Gesamtvorrichtung verbunden ist und Berührungsereignisse beschreibende Berührungsdatensätze enthaltende Nachrichten an die Steuereinrichtung übermittelt, welche diese zu einer Eingabeinformation für ein mittels der Steuereinrichtung umgesetztes Anwendungsprogramm auswertet. Daneben betrifft die Erfindung eine Gesamtvorrichtung.

Gesamtvorrichtungen, insbesondere Kraftfahrzeuge, zeichnen sich durch eine immer größer werdende Anzahl elektronischer Komponenten aus, die insbesondere auch eine Interaktion mit einem Benutzer, beispielsweise einem Fahrer des Kraftfahrzeugs, zur Steuerung der Gesamtvorrichtung und/oder hinsichtlich anderer Funktionen, beispielsweise dem Infotainment, erlauben. Touch-Eingabeeinrichtungen, also berührungssensitive, flächige Eingabevorrichtungen, wie beispielsweise Touchpads oder Touchscreens, zählen dabei zu besonders beliebten Eingabevorrichtungen für solche Gesamtvorrichtungen. Eine geeignete Sensorik einer derartigen Eingabevorrichtung bestimmt hierbei insbesondere die Koordinaten einer Berührung, insbesondere eines Fingers, und stellt eine Busnachricht zusammen, die über eine entsprechende nachrichtenbasierte Busverbindung, beispielsweise einen CAN-Bus, an eine Steuereinrichtung der Gesamtvorrichtung, bzw. eine Komponente derselben, beispielsweise ein Steuergerät, weitergeleitet wird.

Die so beschriebenen Berührereignisse werden durch die Steuereinrichtung ausgewertet, um eine Eingabeinformation zu ermitteln, die beispielsweise den weiteren Ablauf eines Anwendungsprogramms beeinflussen kann. Besonders vorteilhaft sind in diesem Kontext Touchscreens, über welche die Eingabe besonders intuitiv und insbesondere im dargestellten Kontext erfolgen kann. Vorgeschlagen wird im Übrigen auch, handschriftliche Eingaben durch derartige Eingabevorrichtungen entgegenzunehmen, wobei dann die Steuereinrichtung einen geeigneten Auswertungsalgorithmus aufweist, um beispielsweise Koordinatenfolgen als Berührungsereignisse beschreibende Berührungsdatensätze zu der Eingabeinformation auswerten zu können.

Hierbei sind, insbesondere in Kraftfahrzeugen als Gesamtvorrichtungen, eine Vielzahl von Systemtopologien bekannt geworden, in denen derartige Touch-Eingabevorrichtungen eingesetzt werden. Beispielsweise können mehrere solche Eingabevorrichtungen und/oder weitere Komponenten der Gesamtvorrichtung an die nachrichtenbasierte Busverbindung angeschlossen sein; zusätzlich zu der nachrichtenbasierten Busverbindung kann, insbesondere bei der Ausgestaltung als ein Touchscreen, auch eine Videoverbindung vorliegen, über die Videodaten zur Darstellung an den Touchscreen gestreamt werden.

In zumindest einem Teil solcher Gesamtvorrichtungen, insbesondere Kraftfahrzeugen, sehen gesetzliche Vorschriften vor, dass Eingabevorrichtungen und/oder Anzeigevorrichtungen zumindest zum Teil auch durch Nachrüstgeräte oder dergleichen anderer Hersteller ansprechbar sein sollen. Derartige Nach- bzw. Umrüstvorgänge werden auch als "Aftermarket" bezeichnet, so dass eine entsprechende, dann ebenso auf die Busverbindung (und gegebenenfalls eine Videoverbindung) zugreifende Vorrichtung auch als Aftermarketvorrichtung bezeichnet werden kann. Auch die Aftermarketvorrichtung kann dann Eingaben anfordern und entsprechend die Berührungsdatensätze enthaltenden Nachrichten empfangen und auswerten. Hierbei tritt jedoch das Problem des Schutzes von sensitiven Daten, die über die Eingabevorrichtung eingegeben werden sollen, mithin sensitiven Eingabeinformationen, auf. Fragt beispielsweise die gesamtvorrichtungsseitige Steuereinrichtung eine solche sensitive Eingabeinformation, beispielsweise PINs, Kreditkartennummern, Passwörter oder dergleichen ab, können die durch Interaktion des Benutzers mit der Eingabeeinrichtung entstehenden Berührungsdatensätze auf der Busverbindung auch durch eine entsprechend zwischengeschaltete bzw. angekoppelte Aftermarketvorrichtung gelesen und interpretiert werden, so dass die Sicherheit solcher Eingabeinformationen nicht mehr sichergestellt wäre. Auf der anderen Seite wäre eine dauerhafte Absicherung ebenso nicht möglich, da dann die Aftermarketvorrichtung die Touch-Eingabevorrichtung überhaupt nicht mehr nutzen könnte. Dabei ist zu beachten, dass Touch-Eingabevorrichtungen meist keine oder nur eine äußerst geringe Intelligenz aufweisen. Das bedeutet, Touch-Eingabevorrichtungen interpretieren üblicherweise nicht selbst die Berührungsereignisse, sondern senden diese lediglich, insbesondere als Koordinaten in einen Berührungsdatensatz, an die entsprechend nachgeschaltete Einrichtung, die die Eingabeinformation angefordert hat, beispielsweise die Steuereinrichtung oder die Aftermarketvorrichtung.

Dokument US 2012/303964 A1 unterscheidet zwischen einem "Input module", also einem Eingabemodul, einem steuernden Hauptprozessor, der eine Modus bestimmt, und einem Verarbeitungsmodul, in dem Informationen vom Eingabemodul entgegengenommen und verarbeitet werden.

Dokument EP 2 775 421 A1 beschreibt eine getrennt zum Touchscreen vorgesehene Securitybox, welche verschlüsselte Berührungsdatensätze dort nicht zur Auswertung an eine Steuereinrichtung (Main PCB) weitergibt, sondern an ein zugeordnetes Servicecenter bzw. eine Bank.

Der Erfindung liegt daher die Aufgabe zu Grunde, eine Möglichkeit zur Absicherung sensitiver Daten trotz einer Nutzbarkeit einer Touch-Eingabevorrichtung für Aftermarketvorrichtungen anzugeben.

Zur Lösung dieser Aufgabe ist ein Verfahren gemäß Anspruch 1 sowie eine Gesamtvorrichtung gemäß Anspruch 14 vorgesehen.

Bei einem Verfahren der eingangs genannten Art ist erfindungsgemäß vorgesehen, dass bei Aufruf einer eine sensitive Eingabeinformation abfragenden Sicherheitsfunktion in der Steuereinrichtung die Berührungsdatensätze bis zum Abschluss des zugehörigen Eingabevorgangs verschlüsselt über die Busverbindung von der Eingabevorrichtung an die Steuereinrichtung übertragen werden.

Dabei können Sicherheitsfunktionen zweckmäßigerweise in der Steuereinrichtung als solche markiert sein, wobei entsprechende sensitive Eingabeinformationen beispielsweise PINs, Kreditkartennummern, Passwörter und dergleichen umfassen können. Erfindungsgemäß wird mithin vorgeschlagen, lediglich eine partielle Verschlüsselung vorzusehen, die immer dann verwendet wird, wenn eine entsprechende Sicherheitsfunktion innerhalb der Steuereinrichtung aufgerufen wird. Gezielt, insbesondere durch eine entsprechende Nachricht über die Busverbindung, kann dann ein Verschlüsselungsmodus der Eingabevorrichtung aktiviert werden, der solange vorhält, wie die Berührungsereignisse die sensitiven Daten, mithin die sensitive Eingabeinformation, beschreiben. Sodann wird wieder auf einen unverschlüsselten Modus zurückgeschaltet. Auf diese Weise kann eine Aftermarketvorrichtung, deren Zwischenschaltung entlang der Busverbindung zweckmäßigerweise auch im Rahmen der vorliegenden Erfindung ermöglicht ist, problemlos die grundsätzlich die Berührungsdatensätze unverschlüsselt auf die Busverbindung gebende Eingabevorrichtung nutzen, nachdem diese nur für sensitive Daten und bei entsprechenden Abfragen in der Steuereinrichtung temporär verschlüsselt sind. Auf diese Weise ist es seitens einer nicht vom Hersteller der Gesamtvorrichtung stammenden Aftermarketvorrichtung nicht möglich, sensitive Eingabeinformationen beschreibende Berührungsdatensätze abzugreifen und selbst zur Ermittlung der sensitiven Eingabeinformation auszuwerten. Mithin ist sowohl eine erhöhte Sicherheit hinsichtlich sensitiver Eingabeinformation gegeben als auch die Nutzung der Eingabevorrichtung durch Aftermarketvorrichtungen gegeben.

Typische Anwendungsfälle zur Nutzung einer Touch-Eingabevorrichtung zur Eingabe sensitiver Daten sind beispielsweise die Eingabe einer Kreditkartennummer, entweder handschriftlich oder bei Darstellung eines Keyboards. Auf der auch als Anzeigevorrichtung ausgebildeten Eingabevorrichtung, insbesondere einem Touchscreen, beziehungsweise einer zugeordneten Anzeigevorrichtung, wird angezeigt, was bislang eingegeben wurde, während der Benutzer auf der Eingabevorrichtung die nächsten Zahlen schreiben kann, welche wiederum dargestellt werden, sobald sie durch die Steuereinrichtung interpretiert und erkannt wurden. Bei der Darstellung einer virtuellen Zahlentastatur kann entsprechend vorgegangen werden, wobei seitens der Steuereinrichtung dann bekannt ist, welche Koordinaten welcher Zahl entsprechen.

Als Eingabevorrichtung kann konkret ein Touchpad und/oder ein Touchscreen verwendet werden. Während die Nutzung von Touchscreens aufgrund der Möglichkeit zur Darstellung von Eingabehilfen bevorzugt ist, ist auch der Einsatz von Touchpads, insbesondere bei der handschriftlichen Eingabe, zweckmäßig denkbar. Auch allgemein können, wie bereits dargelegt, die Berührungsereignisse eine handschriftliche Eingabe beschreiben.

In zweckmäßiger Ausgestaltung können die Berührungsdatensätze jeweils Berührkoordinaten für einen Finger enthalten. Das bedeutet, jeder Berührungsdatensatz enthält auf entsprechend bekannte Art und Weise kodiert Koordinaten, die angeben, an welcher Position der Eingabevorrichtung ein Finger die berührungssensitive Fläche der Eingabevorrichtung berührt hat. Beispielsweise ist es denkbar, dass hierfür eine Struktur vorgegeben wird, die grundsätzlich eine bestimmte Datengröße zur Folge hat, beispielsweise 4 Byte. Dabei sei angemerkt, dass durchaus vorgesehen sein kann, dass bei sogenannten multitouchfähigen Touch-Eingabevorrichtungen, bei denen mithin mehrere Berührungsereignisse räumlich getrennt, aber gleichzeitig, auftreten können, vorgesehen sein kann, einen Berührungsdatensatz für jedes einzelne Berührungsereignis, mithin jeden einzelnen Finger, zu erzeugen. Bei der Übermittlung über die Busverbindung kann in diesem Zusammenhang vorgesehen sein, entweder mehrere Berührungsdatensätze in einer Nachricht vorgegebener Größe zu übersenden oder aber von dem genutzten Protokoll bereitgestellte Optionen zur Vergrößerung einer Nachricht zu nutzen. Beispielsweise gibt es für den CAN-Bus die Möglichkeit, mittels Segmentierung Nachrichten jeweils um 8-Byte-Blöcke zu erweitern.

Bevorzugt kann als Busverbindung, wie bereits angedeutet, eine CAN-Verbindung oder eine CAN-FD-Verbindung verwendet werden. Der Einsatz einer CAN-FD-Verbindung bietet sich hierbei besonders an, nachdem dort größere Nachrichten möglich sind, die innerhalb einer bestimmten Zeitspanne verwendet werden können, beispielsweise Nachrichten von einer Größe von bis zu 64 Byte alle 10 ms. Weist ein Berührungsdatensatz dann eine Größe von 4 Byte auf, lassen sich mithin eine Vielzahl von Berührungsdatensätzen innerhalb einer einzigen Nachricht übersenden; selbstverständlich kann auch Speicherraum in einer solchen Nachricht für weitere Informationen genutzt werden, was im Folgenden noch genauer dargelegt werden wird.

Auch andere Kommunikationskanäle können als Busverbindung genutzt werden, beispielsweise Ethernet oder ein Kommunikationskanal, der in eine Videoverbindung zu der Eingabevorrichtung integriert ist.

Die Gesamtvorrichtung kann bevorzugt ein Kraftfahrzeug sein. Gerade in Kraftfahrzeugen liegt meist eine vom Hersteller vorgegebene Ausstattung mit einer Vielzahl unterschiedlicher Eingabevorrichtungen, Anzeigevorrichtungen, sonstiger Ausgabemittel, beispielsweise akustischer Ausgabemittel, und dergleichen vor, zu denen auch ein oder mehrere Touch-Eingabevorrichtungen gehören können. Dabei wird in Kraftfahrzeugen zum einen erwartet, nicht vom Hersteller des Kraftfahrzeugs stammende Aftermarketvorrichtungen einsetzen zu können, auf der anderen Seite aber auch ein hoher Schutzstandard für sensitive Daten angesetzt. Hier kann mithin die vorliegende Erfindung mit besonderem Vorteil eingesetzt werden.

Dabei sei an dieser Stelle darauf hingewiesen, dass die Busverbindung nicht exklusiv zur Verbindung der Eingabevorrichtung und der Steuereinrichtung vorgesehen sein muss, sondern durchaus auch weitere Komponenten der Gesamtvorrichtung über das Bussystem mitkommunizieren können. Bei der Steuereinrichtung kann es sich beispielsweise um ein Steuergerät, insbesondere ein Infotainment-Steuergerät, handeln.

Bevor auf weitere vorteilhafte Ausgestaltungen der vorliegenden Erfindung eingegangen wird, soll zunächst der Gedankengang näher dargelegt werden, der zu diesen Ausgestaltungen führt und ihre entsprechenden Vorteile illustriert. Wie bereits erwähnt, sind bisherige Eingabevorrichtungen eher mit wenig "Eigenintelligenz" ausgestattet und liefern so auch lediglich die Berührungsdatensätze als Nachrichten über die Busverbindung. Dies liegt darin begründet, dass die Touch-Eingabevorrichtungen möglichst günstig und wenig kompliziert gehalten werden sollen. Diese Tatsache möglichst wenig zu verändern, ist eines der Ziele der folgenden Ausgestaltungen. Ein anderer, bei einer konkreten Auslegung zu beachtender, wesentlicher Punkt ist, dass Verzögerungen in der Steuerkommunikation möglichst vermieden werden sollten, um eine schlechte Nutzererfahrung zu vermeiden. Gerade im Fall der handschriftlichen Eingabe müssen jedoch eine große Zahl von Nachrichten übertragen werden und im Fall einer Verschlüsselung auch verschlüsselt werden. Beispielsweise kann bei einer CAN-Busverbindung alle zehn Millisekunden eine Nachricht gesendet werden, wobei hierzu gegebenenfalls noch eine höhere Priorisierung von anderen Nachrichten auf den CAN-Bus vorliegen kann, die die Zustellung verlangsamen. Diese Nachrichten haben zudem eine imitierte Datenkapazität, wobei eine Fragmentierung von Daten ebenso vermieden werden sollte, da dann deutliche Verzögerungen entstehen könnten. Verzögerungen sollten jedoch auch nicht durch die Berechnung der Verschlüsselung entstehen, da dann Berührungsdatensätze auch erst später abgesendet werden könnten. In diesem Kontext steht auch der Wunsch danach, möglichst schnell, insbesondere übergangslos, zwischen dem Verschlüsselungsmodus und dem unverschlüsselten Modus wechseln zu können, um auch hier Verzögerungen und dergleichen vermeiden zu können und möglichst schnell die Möglichkeit zur Eingabe bieten zu können.

Hieraus können Anforderungen abgeleitet werden, zum einen, dass die Verschlüsselung selbst wenigstens annäherungsweise ohne eine Berechnungsverzögerung, mithin in Echtzeit, erfolgen soll. Ferner muss der durch die Verschlüsselung entstehende Overhead minimiert werden und idealerweise dann über die Busverbindung gesendet werden, wenn zeitlich beziehungsweise bezüglich der Bandbreite keine Einschränkungen vorliegen. Diese Gedankengänge liegen den meisten im Folgenden näher dargestellten konkreten Ausgestaltungen zugrunde.

Zweckmäßigerweise kann zum Umschalten auf verschlüsselte Berührungsdatensätze und zum Rückschalten auf nicht verschlüsselte Berührungsdatensätze eine Umschaltnachricht in Abhängigkeit von einer Funktionsinformation des Anwendungsprogramms von der Steuereinrichtung an die Eingabevorrichtung übermittelt werden. Das bedeutet, die Entscheidung, wann verschlüsselt werden soll, geht von der Steuereinrichtung aus und wird über eine entsprechende Umschaltnachricht über die Busverbindung an die Eingabevorrichtung übermittelt. Diese wechselt bevorzugt in einem einfachen Umschaltprozess, der unter wenig Aufwand zu realisieren ist, vom Aussenden von Nachrichten mit unverschlüsselten Berührungsdatensätzen auf das Aussenden von Nachrichten mit verschlüsselten Berührungsdatensätzen. Um diese Kommunikation abzusichern, kann mit besonderem Vorteil vorgesehen sein, dass die Umschaltnachrichten verschlüsselt und/oder unter gegenseitiger Authentifizierung übermittelt werden und/oder unterschiedliche Umschaltnachrichten für beide Umschaltrichtungen verwendet werden. Auf diese Weise wird eine erhöhte Sicherheit gegenüber Angriffen, beispielsweise ausgehend von einer Aftermarketvorrichtung, erreicht, welche versuchen, wieder in den unverschlüsselten Modus zurückzuschalten oder dergleichen. In diesem Kontext ist es insbesondere auch vorteilhaft, unterschiedliche Umschaltnachrichten für die beiden Schaltrichtungen heranzuziehen. Zweckmäßigerweise kann ferner die Eingabevorrichtung eine Bestätigungsnachricht bei erfolgtem Umschalten über die Busverbindung an die Steuereinrichtung übermitteln, so dass dieser insbesondere bekanntgemacht wird, dass ab nun mit verschlüsselten Berührungsdatensätzen zu rechnen ist. Allerdings kann eine solche Bestätigungsnachricht auch wegfallen, wenn es für die Steuereinrichtung anderweitig erkennbar ist, dass nun eine Verschlüsselung vorliegt. Eine Bestätigungsnachricht kann nichtsdestotrotz sinnvoll sein, insbesondere wenn ein Authentifizierungsprozess vorliegt, mithin beispielsweise eine Signatur an die Steuereinrichtung rückübermittelt werden soll, wofür eine derartige Bestätigungsnachricht genutzt werden kann.

In einer besonders vorteilhaften Weiterbildung der vorliegenden Erfindung kann vorgesehen sein, dass verschlüsselte Berührungsdatensätze enthaltende Nachrichten durch ein gesetztes Verschlüsselungsbit gekennzeichnet werden und/oder zur Übersendung von verschlüsselte Berührungsdatensätze enthaltenden Nachrichten ein anderer Nachrichtentyp als zur Übersendung von unverschlüsselte Berührungsdatensätze enthaltenden Nachrichten verwendet wird. Auf diese Weise kann die Steuereinrichtung den Nachrichten bereits unmittelbar entnehmen, ob in ihnen verschlüsselte Berührungsdatensätze über die Busverbindung übermittelt wurden. Dabei ist es besonders bevorzugt, wenn unterschiedliche Nachrichtentypen für verschlüsselte Berührungsdatensätze und nicht verschlüsselte Berührungsdatensätze herangezogen werden, nachdem dann kein zusätzliches Verschlüsselungsbit innerhalb der Nachricht verwendet werden muss, sondern durch die unterschiedlichen Nachrichtentypen bereits eine Unterscheidbarkeit vorliegt. Beispielsweise können bei Verwendung eines CAN-Busses als Busverbindung unterschiedliche CAN-Identifier jeweils für unverschlüsselte und verschlüsselte Berührungsdatensätze verwendet werden.

Eine besonders vorteilhafte Weiterbildung der vorliegenden Erfindung sieht vor, dass ein zur eingabevorrichtungsseitigen Verschlüsselung herangezogenes Verschlüsselungsdatenelement, dessen zugeordnetes zur Entschlüsselung zu verwendendes Entschlüsselungsdatenelement aufgrund einer geteilten Basisinformation in der Steuereinrichtung ermittelt wird, in der Eingabevorrichtung vorausberechnet und vorgehalten wird, bis es zur Verschlüsselung verwendet wird. Die Idee dieses Ansatzes ist es also, um die eigentliche Verschlüsselung möglichst schnell, mit möglichst geringer Rechenleistung und möglichst unkompliziert durchführen zu können, die entsprechende Information, also das Verschlüsselungsdatenelement, bereits zu einem Zeitpunkt vorauszuberechnen, an dem das entsprechende Verschlüsselungsdatenelement noch nicht zur Verschlüsselung benötigt wird, so dass Rechenleistung innerhalb der Eingabevorrichtung eingespart werden kann und dennoch eine effektive, schnelle Verschlüsselung ermöglicht wird. Die Eingabevorrichtung weist stattdessen ein Speichermittel auf, in dem das Verschlüsselungsdatenelement vorgehalten werden kann, bis es tatsächlich zur Verschlüsselung benötigt wird.

Dabei werden, was allgemein angemerkt sei, Verschlüsselungsdatenelemente und Entschlüsselungsdatenelemente (zur Entschlüsselung) auf Grundlage einer geteilten Basisinformation ermittelt, die sowohl der Eingabevorrichtung als auch der Steuereinrichtung vorliegen, beispielsweise aufgrund eines Schlüsselpaars oder einer Nonce, worauf im Folgenden noch näher eingegangen werden wird.

Ferner sei angemerkt, dass die Vorausberechnung der Verschlüsselungsdatenelemente durchaus zumindest zeitweise parallel zur Verschlüsselung oder aber allgemein innerhalb des Verschlüsselungsmodus erfolgen kann, nachdem ein Vorteil bereits dadurch gewonnen ist, dass zumindest das Verschlüsselungsdatenelement, welches für den aktuellen, zu verschlüsselnden Berührungsdatensatz benötigt wird, bereits vorausgerechnet vorliegt und diesbezüglich keine zusätzliche Verzögerungen (Delays) auftreten, die zu unerwünschten Effekten führen können.

Mit besonderem Vorteil kann mithin vorgesehen sein, dass die Verschlüsselung, insbesondere auch die Entschlüsselung, der Berührungsdatensätze durch eine insbesondere in Echtzeit durchführbare und/oder die Größe des Berührungsdatensatzes erhaltende Verknüpfungsoperation, insbesondere eine XOR-Operation, erfolgt. Nachdem der wesentliche Anteil der Verschlüsselungsarbeit, mithin die Berechnung des Verschlüsselungsdatenelements, bereits vor der notwendigen Verschlüsselung eines zu verschlüsselnden Berührungsdatensatzes abgeschlossen ist, ist für ein aktuell zu versendenden Berührungsdatensatz lediglich noch die Verknüpfungsoperation, die das Verschlüsselungsdatenelement auf den Berührungsdatensatz anmeldet beziehungsweise sie mit diesem verknüpft, durchzuführen, welche für verschiedene Verschlüsselungsverfahren einfach gehalten werden kann. Besonders bietet sich eine bei Schlüsselströmen üblicherweise genutzte XOR-Operation als Verknüpfungsoperation an, da diese durch ein simples, einfach zu realisierendes und keine nennenswerte Zeit benötigendes Bauteil beziehungsweise elektronisches Bauelement umgesetzt werden kann. Beispielsweise kann die Verknüpfungsoperation durch einen entsprechenden Schaltungsanteil einer Platine einer Steuereinheit der Eingabevorrichtung umgesetzt werden. Besonders zweckmäßig ist es in diesem Kontext auch, wenn die Größe des Berührungsdatensatzes bei der Verschlüsselung erhalten bleibt, so dass kein zusätzlicher Overhead durch die Verschlüsselung entsteht. Beispielsweise können sowohl ein unverschlüsselter Berührungsdatensatz als auch ein verschlüsselter Berührungsdatensatz eine Größe von 4 Byte aufweisen. Auch diese Bedingung erfüllt im Übrigen eine XOR-Operation als Verknüpfungsoperation. Bevorzugt erfolgt auch die Entschlüsselung seitens der Steuereinrichtung in Echtzeit, wobei auch dort entsprechende, insbesondere wenigstens teilweise als Hardware realisierte, Funktionseinheiten bzw. Komponenten vorliegen können.

In besonders vorteilhafter Ausgestaltung der vorliegenden Erfindung kann vorgesehen sein, dass für jeden Berührungsdatensatz ein neues Verschlüsselungsdatenelement verwendet wird, wobei mehrere Verschlüsselungsdatenelemente als ein Vorausberechnungssatz von Verschlüsselungsdatenelementen, insbesondere als ein Schlüsselstrom, vorausberechnet werden. Durch die Veränderung des Verschlüsselungsdatenelements von Berührungsdatensatz zu Berührungsdatensatz wird eine weitere Erhöhung der Sicherheit erreicht. Dabei lässt sich mit besonderem Vorteil im Rahmen der vorliegenden Erfindung die sogenannte Stromverschlüsselung (Stream Cipher) einsetzen. Bei der Stromverschlüsselung wird eine bestimmte Zahl von Verschlüsselungsdatenelementen, ein sogenannter Schlüsselstrom (Key Stream), vorausberechnet, wobei dann jeweils nacheinander die Verschlüsselungsdatenelemente durchgegangen werden.

Bereits an dieser Stelle sei dabei angemerkt, dass somit sowohl die Eingabevorrichtung als auch die Steuereinrichtung in der Lage sein muss, die Reihenfolge der Berührungsdatensätze sinnvoll aufrechtzuerhalten, um eine korrekte Zuordnung der Entschlüsselungsdatenelemente seitens der Steuereinrichtung zu erlauben. Das bedeutet, beispielsweise bei einer noch zu diskutierenden Synchronisierung durch Synchronisierungssignale muss eine korrekte Aufteilung von Berührungsdatensätzen auf Nachrichten erfolgen, so dass sie in richtiger Reihenfolge in Bezug auf das Synchronisierungssignal eintreffen. Was die Steuereinrichtung angeht, müssen die Eintreffzeitpunkte korrekt zugeordnet werden. Weitere Methoden zur Synchronisierung im Sinne der Ermöglichung der korrekten Zuordnung von Entschlüsselungsdatenelementen zu Berührungsdatensätzen, beispielsweise die Verwendung von Zählern, werden im Folgenden noch näher diskutiert werden.

Bezüglich der Anzahl in einem Vorausberechnungssatz vorliegender Verschlüsselungsdatenelemente, mithin der Länge des Schlüsselstroms, bietet sich ein Anpassungsparameter, über den eine geeignete Auslegung einer eingabevorrichtungsseitig vorzusehenden Steuereinheit für den entsprechenden Anwendungsfall erreicht werden kann. Können größere Vorausberechnungssätze mit mehr Verschlüsselungsdatenelementen eingesetzt werden, bedeutet dies, dass, insbesondere zur Verschlüsselungszeit, eine geringere Rechenkapazität vorgesehen werden muss, aber eine größere Speicherkapazität eines Speichermittels der Steuereinheit. Auf der anderen Seite ist bei kleineren Vorausberechnungssätzen, beispielsweise kürzeren Schlüsselströmen, weniger Speicherplatz erforderlich, aber mehr Rechenleistung, da gegebenenfalls im Verschlüsselungsmodus Verschlüsselungsdatenelemente nachberechnet werden müssen. Letztlich kann also über die Wahl der Anzahl der vorauszuberechnenden Verschlüsselungsdatenelemente eine Austarierung von Speicherbedarf und Rechenleistung erfolgen.

Zur Zuordnung eines Entschlüsselungsdatenelements zu einem verschlüsselten Berührungsdatensatz kann zweckmäßig wenigstens ein Zähler verwendet werden, wobei der Zähler sowohl eingabevorrichtungsseitig als auch steuereinrichtungsseitig geführt wird und/oder als Teil einer auch wenigstens einen verschlüsselten Berührungsdatensatz enthaltenden Nachricht von der Eingabevorrichtung an die Steuereinrichtung über die Busverbindung übermittelt wird. Mit anderen Worten muss die Steuereinrichtung wissen, welches Verschlüsselungsdatenelement verwendet wurde, um einen zu entschlüsselnden Berührungsdatensatz mittels des passenden Entschlüsselungsdatenelements zu entschlüsseln. Wird die Reihenfolge der Berührungsdatensätze aufrechterhalten und erreicht jede Nachricht direkt die Steuereinrichtung, ist es ausreichend, die Berührungsdatensätze auf beiden Seiten zu zählen. Eine robustere Ausgestaltung ergibt sich jedoch, wenn der Zählerstand als Teil einer auch wenigstens einen verschlüsselten Berührungsdatensatz enthaltenden Nachricht von der Eingabevorrichtung an die Steuereinrichtung übermittelt wird. Diese Ausgestaltung ist jedoch nur dann sinnvoll möglich, wenn hinreichend viel Platz innerhalb der Nachrichten bereitgestellt wird, was beispielsweise bei Verwendung des CAN-FD-Busses gegeben ist. Der Zähler kann dabei auch zyklisch sein, das bedeutet, er kann einen vorgegebenen, begrenzten Wertebereich aufweisen, beispielsweise von 0 bis 15 bei einem 4-Bit-Zähler oder von 0 bis 255 bei einem 8-Bit-Zähler. Dies bestimmt letztlich auch, wie viel Speicherplatz beziehungsweise Nachrichtenanteil für den Zähler benötigt wird. Ein solcher, zyklisch nach dem Maximalwert wieder mit dem Startwert beginnender Zähler kann dabei auch die Grundlage für eine hierarchische Zählerstruktur beziehungsweise eine Synchronisierung darstellen, wenn beispielsweise nach jedem "Reset" des Zählers ein Synchronisierungssignal ausgegeben wird. Eine Hierarchie von Zählern, so vorgesehen, kann sich im Übrigen auch an der Anzahl an Verschlüsselungsdatenelementen in dem Vorausberechnungssatz orientieren.

Wie bereits erwähnt, kann vorgesehen sein, dass zur Synchronisierung des oder wenigstens eines des wenigstens einen Zählers bei wenigstens einem Zählerstand eine Synchronisierungsnachricht von der Eingabevorrichtung an die Steuereinrichtung übermittelt wird. Eine solche Synchronisierungsnachricht kann konkret beispielsweise immer dann über die Busverbindung gesendet werden, wenn ein einen Wertebereich wiederholt durchlaufender Zähler zurückgesetzt, also wieder auf den ersten Wert, gesetzt wird. Auf diese Weise liegt zumindest für gleich große Sätze von Berührungsdatensätzen immer wieder ein Synchronisierungszeitraum vor. Das System kann sich schnell wieder synchronisieren und der Benutzer kann seine ggf. verloren gegangene Eingabe sofort wiederholen.

Eine vorteilhafte Weiterbildung sieht zudem vor, dass ein bei einem beidseitig bekannten, von Null verschiedenen Zählerstand startender Zähler verwendet wird. Auf diese Weise kann eine weitere Erhöhung der Sicherheit erreicht werden, da eine weitere einem möglichen Abhörer unbekannte Information eingeflochten wird, wobei ein solcher Zählerstand (insbesondere auch der Startzählerstand) als Zeitinformation auch in andere Sicherheitsmechanismen Eingang finden kann, beispielsweise in die Vorausberechnung der Verschlüsselungsdatenelemente und/oder bei gegebenenfalls eingesetzten Authentifizierungsverfahren, wenn eingabevorrichtungsseitig eine Signatur erzeugt werden soll. Hier kann dann jeweils der aktuelle Zählerstand oder auch der Startzählerstand eingehen.

Es sei an dieser Stelle hinsichtlich der Synchronisierung nochmals angemerkt, dass sowohl die Eingabevorrichtung in der Lage sein muss, eine entsprechende Zuordnung von Berührungsdatensätzen vor und nach einer Synchronisierungsnachricht zu erlauben als auch die Steuereinrichtung in der Lage sein muss, insbesondere bei einer Pufferung, diese Reihenfolge korrekt aufrechtzuerhalten.

Um eine weitere Absicherung gegen den Verlust von Nachrichten zu erreichen, kann vorgesehen sein, dass seitens der Steuereinrichtung bei Fehlschlag einer Entschlüsselung die Entschlüsselung für wenigstens einen zukünftigen Zählerstand des wenigstens einen Zählers erneut versucht wird. Mithin kann, um das Risiko verlorener Nachrichten und einen damit einhergehenden Datenverlust durch aufgrund Verlust der Synchronisierung nicht mehr mögliche Entschlüsselung möglichst zu vermeiden, vorgesehen sein, dass die Steuereinrichtung eine Entschlüsselung auch für zukünftige Zählerstände versuchen kann, was im Übrigen auch bezüglich einer höheren Zählerhierarchie (beispielsweise bei Verlust einer Synchronisierungsnachricht) sinnvoll sein kann. Auf diese Weise wird die Robustheit des Verfahrens gegen den Verlust von Nachrichten weiter erhöht.

Allgemein kann im Rahmen der vorliegenden Erfindung vorgesehen sein, dass die Verschlüsselung der Berührungsdatensätze unter Verwendung eines vorgegebenen asymmetrischen oder symmetrischen Schlüsselpaares, das in der Eingabevorrichtung und in der Steuereinrichtung gespeichert ist, und/oder eines für eine Verschlüsselungsphase oder einen Aktivitätszeitraum ausgehandelten Sessionschlüssels, welcher insbesondere in Abhängigkeit von dem Schlüsselpaar ermittelt wird, erfolgt. Besonders vorteilhaft ist es dabei, wenn ein insbesondere gesamtvorrichtungsspezifisches Schlüsselpaar bildende Schlüssel insbesondere unveränderbar und/oder gesichert jeweils in der Eingabevorrichtung und der Steuereinrichtung gespeichert sind. Dabei wird eine symmetrische Verschlüsselung mit identischen Schlüsseln des Schlüsselpaares bevorzugt. Verfahren zur möglichst manipulationssicheren Einspeicherung eines derartigen Schlüssels sind im Stand der Technik bereits vorgeschlagen worden und können auch im Rahmen der vorliegenden Erfindung eingesetzt werden.

Alternativ oder zusätzlich kann auch ein Sessionschlüssel (Sessionkey) zwischen der Eingabevorrichtung und der Steuereinrichtung ausgehandelt werden. Dabei ist es besonders bevorzugt, wenn der Sessionschlüssel in Abhängigkeit der Schlüssel des fest eingespeicherten Schlüsselpaars ermittelt wird. In einer konkreten Ausgestaltung kann vorgesehen sein, dass in einer Initialisierungsphase die Steuereinrichtung eine Sessioninformation, insbesondere eine Nonce, an die Eingabevorrichtung übermittelt. Sowohl die Eingabevorrichtung als auch die Steuereinrichtung sind nun in der Lage, beispielsweise konkret den Vorausberechnungssatz zu ermitteln, beispielsweise in Abhängigkeit von dem jeweiligen Schlüssel des Schlüsselpaars und/oder von der Sessioninformation, wobei die Sessioninformation in anderen Ausführungsbeispielen auch lediglich genutzt werden kann, um für einen Authentifizierungsvorgang eine Signatur, beispielsweise eine HMAC, für die Eingabevorrichtung zu generieren. Es sei angemerkt, dass beispielsweise eine als Sessioninformation übersendete Nonce auch selbst den Sessionschlüssel bilden kann. Zudem sei angemerkt, dass auch Zählerstände in die Generierung, insbesondere Vorausberechnung, von Verschlüsselungsdatenelementen und/oder Signaturen eingehen kann, um die Sicherheit weiter zu erhöhen.

Es wird ferner darauf hingewiesen, dass aufgrund der möglichst einfachen Ausgestaltung der Eingabevorrichtung mit eher wenig Eigenintelligenz üblicherweise die Steuereinrichtung die Sessioninformation, insbesondere die Nonce, generieren wird, nachdem dies seitens der Eingabevorrichtung nicht möglich oder zumindest nicht vorgesehen ist. Es sind jedoch auch Ausgestaltungen denkbar, in denen eine Sessioninformation auf beiden Seiten generiert wird. Die Steuereinrichtung schickt dann beispielsweise in einer Initialisierungsnachricht eine steuereinrichtungsseitig generierte Sessioninformation, insbesondere eine Nonce, und die Eingabevorrichtung generiert in Reaktion eine eigene Sessioninformation, ggf. in Abhängigkeit der steuereinrichtungsseitigen Sessioninformation, die über eine Antwortnachricht an die Steuereinrichtung übersandt wird, so dass die Sessioninformationen beidseitig vorliegen. Soll oder kann die eingabevorrichtungsseitige Sessioninformation keine Nonce sein, ist vorzugsweise ein Monotonzähler vorgesehen, dessen Stand die Sessioninformation bildet und der ohne Komplexität realisierbar ist.

Wie bereits beispielhaft angemerkt wurde, kann wenigstens ein Teil des Nachrichtenaustauschs zwischen der Eingabevorrichtung und der Steuereinrichtung unter Verwendung eines Authentifizierungsverfahrens erfolgen, insbesondere auf Grundlage einer geteilten Basisinformation. Die geteilte Basisinformation (Shared Information) kann, wie bereits dargestellt wurde, wiederum beispielhaft das Schlüsselpaar, einen Sessionschlüssel, einen Startzählerstand und dergleichen umfassen. Insbesondere ist es konkret denkbar, als Signatur seitens der Eingabevorrichtung eine HMAC zu erzeugen, welche dann in wenigstens einer weiteren Nachricht von der Eingabevorrichtung an die Steuereinrichtung zurückübermittelt wird, so dass die Eingabevorrichtung gegenüber der Steuereinrichtung authentifiziert ist.

Insbesondere bei größeren Signaturen und/oder wenn möglichst wenige Statusnachrichten von der Eingabevorrichtung an die Steuereinrichtung genutzt werden sollen, beispielsweise keine Bestätigungsnachrichten auf Umschaltnachrichten und/oder Bestätigungsnachrichten zum Erhalten einer Sessioninformation eingesetzt werden sollen, kann eine zweckmäßige Ausgestaltung der vorliegenden Erfindung auch vorsehen, dass eine von der Eingabevorrichtung erstellte Signatur wenigstens teilweise in auch verschlüsselte Berührungsdatensätze enthaltenden Nachrichten übermittelt wird. Das bedeutet also, die Signatur kann auf mehrere solcher Nachrichten aufgeteilt sein, mithin segmentiert sein, nachdem, um Verzögerungen wie eingangs erläutert zu vermeiden, gegebenenfalls nicht die gesamte Signatur übermittelt werden kann, zumindest nicht, ohne dafür einen Berührungsdatensatz erst in einem späteren Zeitfenster absenden zu können. Dabei ist zu beachten, dass auch Eingabevorrichtungen bekannt und gängig sind, die nur dann Berührungsdatensätze erzeugen und in Nachrichten versenden, wenn auch tatsächlich ein Berührungsereignis stattgefunden hat. Dann kann es vorkommen, dass innerhalb eines Zeitintervalls nicht genügend Berührungsereignisse auftreten, um die komplette Signatur zu übermitteln. Dann kann vorgesehen sein, Leernachrichten, die mithin keine verschlüsselten Berührungsdatensätze enthalten, zur Vervollständigung der Übermittlung der Signatur zu verwenden.

In anderen Ausgestaltungen bietet es sich an, von der Eingabevorrichtung erstellte Signaturen beispielsweise als Teil von Bestätigungsnachrichten (beispielsweise auf eine Umschaltnachricht), Synchronisierungsnachrichten oder dergleichen zu übermitteln. Letzteres ist insbesondere dann sinnvoll, wenn die Signatur mit einem Zählerstand aktualisiert verschlüsselt wird.

Bezüglich der Vorausberechnung sei an dieser Stelle noch angemerkt, dass bereits vor dem eigentlichen Aufruf der Sicherheitsfunktion vorgesehen sein kann, einen Vorausberechnungssatz zu erzeugen, der dann für den nächsten Verschlüsselungszeitabschnitt eingesetzt wird. Hierzu kann die Steuereinrichtung eine beispielsweise eine Sessioninformation enthaltende Nachricht, beispielsweise eine Nonce, an die Eingabevorrichtung übermitteln, welche beispielsweise den Vorausberechnungssatz, insbesondere einen Schlüsselstrom, vorausberechnet und eine entsprechende Bestätigung ("nonce ready") als Bestätigungsnachricht an die Steuerungseinrichtung zurückübermittelt. Wenn dann später die Sicherheitsfunktion aufgerufen wird, liegen die Verschlüsselungsdatenelemente bereits vor und es kann eine schnelle, insbesondere in Echtzeit durchführbare Verschlüsselung mittels einer Verknüpfungsoperation erreicht werden.

In einer zweckmäßigen Weiterbildung der Erfindung kann vorgesehen sein, dass bei der Detektion eines Fehlers im Rahmen der Verschlüsselung durch die Steuereinrichtung eine Warnausgabe über wenigstens ein von der Eingabevorrichtung unabhängiges, von einer Aftermarketvorrichtung nicht ansprechbares, Ausgabemittel erfolgt. Fehler können dabei beispielsweise eine fehlgeschlagene Authentifizierung, eine nicht aktivierte beziehungsweise zu früh deaktivierte Verschlüsselung, eine fehlgeschlagene Entschlüsselung und dergleichen sein. Insbesondere in einem Kraftfahrzeug als Gesamtvorrichtung existieren viele unterschiedliche Arten, eine Warnung an einen Benutzer auszugeben. Beispielsweise kann eine (gegebenenfalls weitere) Anzeigevorrichtung eingesetzt werden, beispielsweise in der Instrumententafel und/oder ein Head-up-Display, welche üblicherweise nicht von einer Aftermarketvorrichtung angesteuert werden können. Auch Ausgabemittel für Audio werden üblicherweise nicht von Aftermarketvorrichtungen genutzt, so dass hierdurch eine Warnung generiert werden kann. Andere Maßnahmen bei Vorliegen eines Fehlers können im Übrigen auch eine funktionale Einschränkung eines anderen Teils der Gesamtvorrichtung, insbesondere des Kraftfahrzeugs, umfassen, wenn ernst zu nehmende Bedrohungen für die Gesamtvorrichtung, insbesondere das Kraftfahrzeug, vorliegen. Schließlich ist es als Reaktion auf einen Fehler auch denkbar, die auch als Anzeigevorrichtung ausgebildete Eingabevorrichtung beziehungsweise eine zugeordnete Anzeigevorrichtung schwarzzuschalten.

Diese Fehlerabfrage kann im Übrigen auch über die Verschlüsselung beziehungsweise Authentifizierung über die Busverbindung hinaus erweitert werden, nachdem beispielsweise auch bei einer gegebenenfalls zusätzlich vorgesehenen Videoverbindung eine Authentifizierung vorgesehen sein kann und fehlschlagen kann. Zu berücksichtigende Fehler können auch von einem IDS (Intrusion Detection System) stammen.

In der vorliegenden Erfindung ist mindestens eine der beiden folgenden Alternativen vorgesehen. Es ist vorgesehen, dass:
- mehrere zur eingabevorrichtungsseitigen Verschlüsselung herangezogene Verschlüsselungsdatenelemente, deren zugeordnetes zur Entschlüsselung zu verwendendes Entschlüsselungsdatenelement aufgrund einer geteilten Basisinformation in der Steuereinrichtung ermittelt wird, als ein Vorausberechnungsdatensatz, insbesondere ein Schlüsselstrom, in der Eingabevorrichtung vorausberechnet und vorgehalten werden, bis sie zur Verschlüsselung verwendet werden, wobei für jeden Berührungsdatensatz ein neues Verschlüsselungsdatenelement verwendet wird,
   und/oder
- bei Detektion eines Fehlers im Rahmen der Verschlüsselung durch die Steuereinrichtung eine Warnausgabe über wenigstens ein von der Eingabevorrichtung unabhängiges, von einer Aftermarketvorrichtung nicht ansprechbares, Ausgabemittel erfolgt.

Vorzugsweise kann bei einer auch als Anzeigevorrichtung ausgebildeten Eingabevorrichtung und/oder einer der Eingabevorrichtung zugeordneten Anzeigevorrichtung über eine zusätzlich zu der Busverbindung vorgesehene Videoverbindung eine gegenseitige Authentifizierung der Steuereinrichtung und der Anzeigevorrichtung, konkret der angezeigten Inhalte, erfolgen, um auch hier die Sicherheit zu erhöhen. Ein entsprechendes, auch im Rahmen der vorliegenden Erfindung geeignetes Authentifizierungsverfahren für eine Videoverbindung wurde beispielsweise in der nachveröffentlichten deutschen Patentanmeldung DE 10 2017 212 809.7 vorgeschlagen.

In einer zweckmäßigen Weiterbildung der vorliegenden Erfindung kann vorgesehen sein, dass bei einer auch als Anzeigevorrichtung ausgebildeten Eingabevorrichtung und/oder einer der Eingabevorrichtung zugeordneten Anzeigevorrichtung eine Darstellung eines Eingabehinweises für die sensitive Eingabeinformation erst bei aktivierter Verschlüsselung erfolgt. Nachdem die Umschaltung auf den Verschlüsselungsmodus seitens der Eingabevorrichtung aufgrund von Verzögerungen entlang der Elektronik der Steuereinrichtung, der Busverbindung und/oder der Eingabevorrichtung selbst eine gewisse Zeit in Anspruch nehmen kann, wird zweckmäßigerweise der Benutzer auch nicht durch eine verfrühte Anzeige des Eingabehinweises angeregt, die sensitive Information einzugeben, während die Berührungsdatensätze noch unverschlüsselt über die Busverbindung übermittelt werden. Auf diese Weise wird eine weitere Erhöhung der Sicherheit erreicht. Die Aktivierung des Verschlüsselungsmodus seitens der Eingabevorrichtung kann hierbei besonders bevorzugt durch Empfang einer entsprechenden Bestätigungsnachricht auf eine Umschaltnachricht festgestellt werden. Dabei sei darauf hingewiesen, dass durchaus auch weitere Bedingungen denkbar sind, um die Freigabe der Darstellung des Eingabehinweises für die sensitive Eingabeinformation freizuschalten. Beispielsweise kann als zusätzliche Bedingung angefordert werden, dass eine Authentifizierung über die Videoverbindung erfolgt ist.

Zweckmäßigerweise kann vorgesehen sein, dass die Eingabevorrichtung bei einem Neustart immer im nichtverschlüsselten Modus startet. Das bedeutet, es kann explizit vorgesehen sein, den Verschlüsselungsmodus nicht über einen Reset hinweg aufrechtzuerhalten. Die Eingabevorrichtung (und gegebenenfalls auch die Steuereinrichtung) starten immer im unverschlüsselten Modus. Auf diese Weise wird die Nutzbarkeit durch eine Aftermarketvorrichtung abschließend sichergestellt und es wird ein Ausweg geboten, wenn sich die Eingabevorrichtung und die Steuereinrichtung in unterschiedlichen Modi befinden.

Die Zurücksetzung in den gleichen, unverschlüsselten Modus, kann auch sichergestellt werden, wenn bei einem Reset der Eingabevorrichtung und/oder der Steuereinrichtung ein Reset des jeweils anderen Kommunikationspartners, insbesondere über eine authentifizierte Nachricht erfolgt. Dabei ist die Authentifizierung für die entsprechende Nachricht äußerst wichtig, um Resets, die beispielsweise durch eine Aftermarketvorrichtung ausgelöst werden, zu vermeiden. Die entsprechende Resetnachricht kann beispielsweise eine zufällig gewählte Challenge und eine HMAC enthalten, wobei auch andere Authentifizierungsverfahren denkbar sind, insbesondere unter Nutzung eines ohnehin fest in der Eingabevorrichtung und der Steuereinrichtung gespeicherten Schlüsselpaares.

Neben dem Verfahren betrifft die vorliegende Erfindung auch eine Gesamtvorrichtung, insbesondere ein Kraftfahrzeug, aufweisend wenigstens eine berührungssensitive, flächige Eingabevorrichtung, insbesondere einen Touchscreen und/oder ein Touchpad, und eine Steuereinrichtung, wobei die Eingabevorrichtung über eine nachrichtenbasierte Busverbindung mit der Steuereinrichtung verbunden ist und eine Steuereinheit aufweist, wobei ein durch die die Steuereinheit und die Steuereinrichtung gebildetes Steuermittel zur Durchführung des erfindungsgemäßen Verfahrens ausgebildet ist. Sämtliche Ausführungen bezüglich des erfindungsgemäßen Verfahrens lassen sich analog auf die erfindungsgemäße Gesamtvorrichtung übertragen, mit welcher mithin ebenso die bereits genannten Vorteile erhalten werden können. Die Steuereinheit der Eingabevorrichtung ist insbesondere wenigstens ergänzt um eine Verschlüsselungseinheit, über die die Verschlüsselung realisiert wird. Konkret kann die Verschlüsselungseinheit ein Speichermittel, ein Vorausberechnungsmodul sowie ein Verknüpfungsmodul zur Anwendung von mittels des Vorausberechnungsmoduls vorausberechneten, in dem Speichermittel gespeicherten Verschlüsselungsdatenelementen auf einen aktuell über die Busverbindung zu versendenden Berührungsdatensatz aufweisen. Die Rechenleistung sowie der Speicherbedarf der Verschlüsselungseinheit können dabei, wie beschrieben, über die Größe des Vorausberechnungssatzes gegeneinander ausbalanciert werden, um dem entsprechenden Anwendungsfall zu genügen.

Zusammenfassend sei noch angemerkt, dass sich eine besonders vorteilhafte Ausgestaltung dann ergibt, wenn die Busverbindung durch einen CAN-FD-Bus gebildet wird, eine Stromverschlüsselung zur Verschlüsselung der Berührungsdatensätze verwendet wird, für die ein Schlüsselstrom einer bestimmten Länge vorausberechnet wird, und zur Synchronisierung von Verschlüsselung und Entschlüsselung ein Zähler verwendet wird, welcher bevorzugt auch als Teil der Nachrichten übertragen werden kann. Bevorzugt werden ferner in diesem besonders vorteilhaften Ausführungsbeispiel unterschiedliche Nachrichtentypen für verschlüsselte und unverschlüsselte Berührungsdatensätze verwendet. Die Vorausberechnung erfolgt dabei idealerweise bereits vor dem Aufruf der Sicherheitsfunktion. Als Verknüpfungsoperation wird eine XOR-Operation eingesetzt. Auf diese Weise treten keine relevanten Verzögerungen auf, so dass insbesondere auch bei handschriftlicher Eingabe der sensitiven Eingabeinformation durch einen Benutzer weiter eine verlässliche Übermittlung der Berührungsereignisse und eine verlässliche Auswertung derselben erfolgen kann. Auch nahtloses Umschalten zwischen dem Verschlüsselungsmodus und dem unverschlüsselten Modus ist möglich. Aufgrund der Verwendung eines Zählers wird eine besonders hohe Robustheit erreicht.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze einer erfindungsgemäßen Gesamtvorrichtung,
- Fig. 2: einen grundsätzlichen Ablaufplan des erfindungsgemäßen Verfahrens,
- Fig. 3: einen eine Initialisierungsphase erläuternden Ablaufplan,
- Fig. 4: eine Erläuterung zu einer möglichen Segmentierung einer zu übersendenden Signatur,
- Fig. 5: einen Ablaufplan zur Berechnung von Verschlüsselungsdatenelementen während der Nutzung anderer Verschlüsselungsdatenelemente zur Verschlüsselung,
- Fig. 6: einen Ablaufplan zur Erläuterung von Synchronisierungsnachrichten, und
- Fig. 7: einen Ablaufplan zur Erläuterung zur Beendigung des Verschlüsselungsmodus.

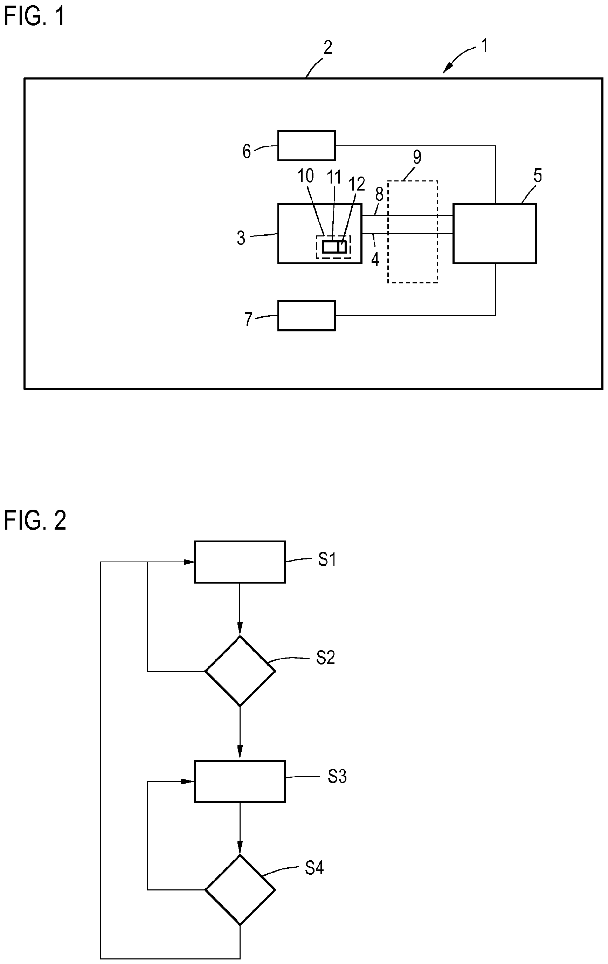

Fig. 1 zeigt die Prinzipskizze einer erfindungsgemäßen Gesamtvorrichtung 1, die vorliegend als ein Kraftfahrzeug 2 ausgebildet ist. Neben einer Vielzahl anderer Komponenten und Kommunikationsverbindungen, die hier der Übersichtlichkeit halber nicht gezeigt sind, umfasst das Kraftfahrzeug 2 zunächst wenigstens eine berührungssensitive, flächige Eingabevorrichtung 3 in Form eines Touchscreens, der beispielsweise im Bereich einer Mittelkonsole des Kraftfahrzeugs 2 angeordnet sein kann. Alternativ kann es sich auch im eine Touchfläche (Touchpad) handeln, der bevorzugt eine Anzeigevorrichtung, insbesondere ein Display, zugeordnet ist. Es können auch mehrere derartige Touch-Eingabevorrichtungen 3 vorgesehen sein. Die Touch-Eingabevorrichtung 3 kommuniziert über eine in diesem Beispiel durch einen CAN-FD-Bus bereitgestellte Busverbindung 4 mit einer kraftfahrzeugseitigen Steuereinrichtung 5, die als Steuergerät, insbesondere Infotainment-Steuergerät, ausgebildet sein kann und zumindest eine unmittelbar an den CAN-FD-Bus angeschlossene Komponente umfasst. An die Busverbindung 4 können auch weitere Komponenten des Kraftfahrzeugs 2 angeschlossen sein. Ferner sind auch unabhängig von dem CAN-Bus ansteuerbare Anzeigevorrichtungen 6 und akustische Ausgabemittel 7 vorhanden. Die Eingabevorrichtung 3, die Steuereinrichtung 5, die Anzeigeeinrichtung 6 (beispielsweise als Instrumentenpanel beziehungsweise Teil eines Instrumentenpanels) und das akustische Ausgabemittel 7 sind herstellerseitig fest im Kraftfahrzeug 2 verbaut.

Nachdem die Eingabevorrichtung 3 als Touchscreen ausgebildet ist, mithin auch als Anzeigevorrichtung wirkt, besteht zudem eine Videoverbindung 8 zu der Steuereinrichtung 5. Über diese Videoverbindung findet im Übrigen auch eine Authentifizierung, wie beispielsweise in der nachveröffentlichten DE 10 2017 212 809.7 beschrieben, statt. Die Busverbindung 4 kann dabei als Rückkanal der Videoverbindung 8 eingesetzt werden.

Damit die Anzeigevorrichtung 3 auch von nicht vom Hersteller des Kraftfahrzeugs 2 stammenden, in Fig. 1 als optional angedeuteten Aftermarketvorrichtungen 9 genutzt werden kann, ist es möglich, auch die Aftermarketvorrichtung 9 an den CAN-FD-Bus anzuschließen, so dass sie mithin Nachrichten auslesen kann und selbst Nachrichten dorthin ausgeben kann. Bezüglich der Videoverbindung 8 kann vorgesehen sein, einen Switch zu verwenden.

Die auch im Rahmen der vorliegenden Erfindung weiterhin wenig Eigenintelligenz aufweisende Anzeigevorrichtung 3 weist eine Steuereinheit 10 auf, die gemeinsam mit der Steuereinrichtung 5 ein Steuermittel bildet, das das erfindungsgemäße Verfahren durchführen kann. Hierzu weist die Steuereinheit 10 insbesondere eine Verschlüsselungseinheit 11 mit einem Speichermittel 12 auf, wobei die Verschlüsselungseinheit 11, hier nicht näher gezeigt, insbesondere ein Vorausberechnungsmodul und ein Bauelement beziehungsweise einen Schaltungsabschnitt aufweist, um eine Verknüpfungsoperation zur Verschlüsselung anhand eines in dem Speichermittel gespeicherten, vorausberechneten Verschlüsselungsdatenelements durchzuführen. Selbstverständlich weist zur Realisierung der Verschlüsselung die Steuereinrichtung 5 entsprechende Funktionseinheiten auf, die durch verschiedene konkrete Komponenten umgesetzt werden können und der Übersichtlichkeit halber nicht gezeigt sind.

Hinsichtlich des erfindungsgemäßen Verfahrens ist die Touch-Eingabevorrichtung 3 letztlich in zwei Betriebsmodi betreibbar, nämlich einem Verschlüsselungsbetriebsmodus und einem nicht verschlüsselten beziehungsweise unverschlüsselten Betriebsmodus. In dem unverschlüsselten Betriebsmodus werden Berührungsereignisse als Berührungsdatensätze, die jeweils Berührkoordinaten für einen Finger enthalten, unverschlüsselt mittels entsprechender Nachrichten über die Busverbindung 4 ausgegeben. Im Verschlüsselungsmodus werden die Berührungsdatensätze zunächst mittels der Verknüpfungsoperation verschlüsselt, ehe sie als entsprechende verschlüsselte Berührungsdatensätze enthaltende Nachrichten über die Busverbindung 4 ausgegeben werden.

Fig. 2 zeigt einen grundsätzlichen Ablaufplan wesentlicher Schritte des erfindungsgemäßen Verfahrens. In einem Schritt S1 wird die Eingabevorrichtung im unverschlüsselten Modus betrieben, das bedeutet, die die jeweiligen Koordinaten für jeweils einen Finger enthaltenden Berührungsdatensätze werden unverschlüsselt über die Busverbindung 4 übertragen, insbesondere an die Steuereinrichtung 5, gegebenenfalls jedoch auch an die Aftermarketvorrichtung 9, wo sie entsprechend ausgewertet werden, um eine zugehörige Eingabeinformation für ein Anwendungsprogramm zu ermitteln. Dabei ist insbesondere über die Touch-Eingabevorrichtung 3 auch eine handschriftliche Eingabe möglich.

An dieser Stelle sei darauf hingewiesen, dass die Eingabevorrichtung 3 nach einem Reset immer im unverschlüsselten Modus gestartet wird, was auch für die Steuereinrichtung 5 gilt, nachdem dies ein Grundzustand ist, so dass vermieden werden kann, dass unterschiedliche Betriebsmodi vorliegen. Um dies weiter zu unterstützen, kann vorgesehen sein, dass bei einem Reset der Eingabevorrichtung 3 oder der Steuereinrichtung 5 jeweils über authentifizierte Nachrichten eine Rückschaltung in den unverschlüsselten Modus erfolgt oder ein Reset des jeweils anderen Kommunikationspartners vorgenommen wird, um sicherzustellen, dass beide Kommunikationspartner wieder im unverschlüsselten Modus betrieben werden.

In einem Schritt S2 wird seitens der Steuereinrichtung 5 überprüft, ob eine sensitive Eingabeinformationen anfordernde Sicherheitsfunktion eines Anwendungsprogramms aufgerufen wird. Ist dies nicht der Fall, wird mit Schritt S1 wie üblich fortgefahren und es werden weiterhin unverschlüsselte Berührungsdatensätze übertragen. Wird jedoch eine Sicherheitsfunktion aufgerufen, wobei diese beispielsweise vorbestimmt markiert worden sind, soll also beispielsweise eine sensitive Eingabeinformation wie eine Kreditkartennummer abgefragt werden, wird sowohl seitens der Eingabevorrichtung 3 als auch der Steuereinrichtung 5 in einem Schritt S3 in den Verschlüsselungsmodus geschaltet und die Berührungsdatensätze werden verschlüsselt an die Steuereinrichtung 5 übertragen, dort entsprechend entschlüsselt und der Auswertung zugeführt. Die Umschaltung in den Verschlüsselungsmodus erfolgt durch eine entsprechende Umschaltnachricht der Steuereinrichtung 5 an die Eingabevorrichtung 3 über die Busverbindung 4, welche mit einer entsprechenden Bestätigungsnachricht reagieren kann, sobald umgeschaltet wurde. Es wird angemerkt, wie im Folgenden im Hinblick auf detaillierte Ausführungsbeispiele erläutert werden wird, dass der Verschlüsselungsvorgang des Schrittes S3 bereits durch Vorausberechnung von Verschlüsselungsdatenelementen vorbereitet worden sein kann.

In einem Schritt S4 wird überprüft, ob die Eingabe der sensitiven Eingabeinformation abgeschlossen ist, mithin die sicherheitskritische Eingabe beendet ist. Ist dies nicht der Fall, wird weiterhin im Schritt S3 verschlüsselt, ansonsten wird wieder in den unverschlüsselten Modus zurückgeschaltet, vgl. Schritt S1, wobei wiederum entsprechende Umschaltnachrichten verwendet werden, in diesem Fall jedoch eine andere Umschaltnachricht, die ebenso ein Authentifizierungsverfahren nutzt.

Es sei darauf hingewiesen, dass in der Steuereinrichtung 5 ständig auf Fehler bezüglich der Verschlüsselung (sowie gegebenenfalls sonstige Fehler) überwacht wird. Schlägt eine Authentifizierung fehl, kann nicht in den Verschlüsselungsmodus umgeschaltet werden, schlägt die Verschlüsselung fehl oder dergleichen, kann wenigstens eine Maßnahme ergriffen werden, wobei vorliegend eine Warninformation an einen Benutzer unter Nutzung von Ausgabemitteln, die nicht unter der Kontrolle einer Aftermarketvorrichtung 9 stehen können, erfolgt. Im vorliegenden Beispiel können das die Anzeigevorrichtung 6 und/oder das akustische Ausgabemittel 7 sein. Weitere Quellen für Fehlerinformationen können die Video-Authentifizierung der Videoverbindung 8 sowie Informationen eines IDS (Intrusion Detection System) sein.

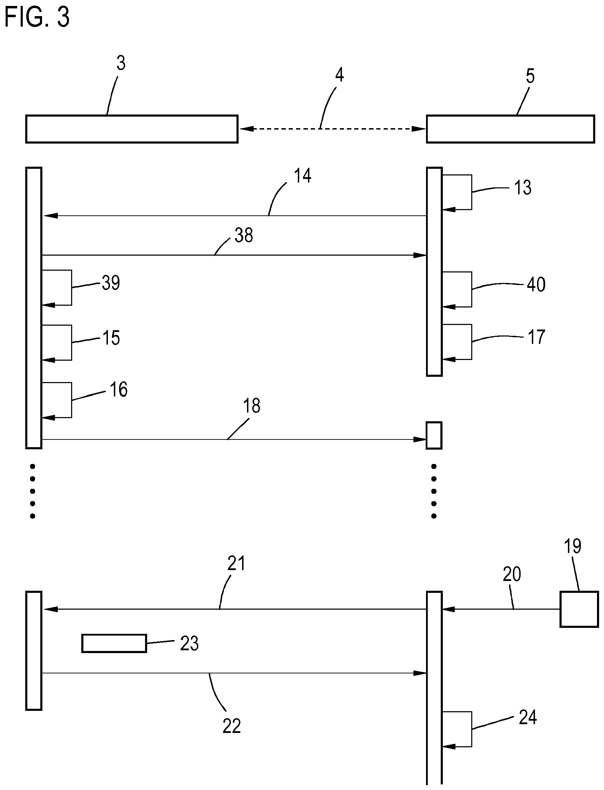

Fig. 3 zeigt genauer die Abläufe in einer Initialisierungsphase bei einem Ausführungsbeispiel des erfindungsgemäßen Verfahrens. Hierbei sollen Verschlüsselungsdatenelemente einer hier anzuwendenden Stromverschlüsselung, mithin ein Schlüsselstrom (Key Stream), vorausberechnet werden und in dem Speichermittel 12 abgelegt werden, während beispielsweise keine großen beziehungsweise keine zu verschlüsselnden Datenmengen von der Eingabevorrichtung 3 zu erwarten sind. Als Grundlage ist anzumerken, dass in den hier dargestellten Ausführungsbeispielen sowohl in der Steuereinrichtung 5 als auch in der Eingabevorrichtung 3 ein Schlüssel eines symmetrischen Schlüsselpaares abgelegt ist, der gesamtvorrichtungsspezifisch sein kann und zur gegenseitigen Authentifizierung benutzt werden kann.

Die Domänen der Eingabevorrichtung 3 und der Steuereinrichtung 5 sind im oberen Bereich der Fig. 3 (wie auch der folgenden Figuren) jeweils angedeutet.

Gemäß dem Pfeil 13 wird in einem ersten Schritt seitens der Steuereinrichtung 5 als steuereinrichtungsseitige Sessioninformation eine Nonce erzeugt, die gemäß dem Pfeil 14 in einer Initialisierungsnachricht an die Eingabevorrichtung 3 übermittelt wird. Im vorliegenden Fall kann die Eingabevorrichtung 3 selbst keine Nonce erzeugen, so dass als eingabevorrichtungsseitige Sessioninformation ein Zählerstand eines Monotonzählers (monostatic counter) verwendet und gemäß dem Pfeil 38 in einer Antwortnachricht an die Steuereinrichtung 5 rückübermittelt wird.

Es sei angemerkt, dass es in anderen Ausführungsbeispielen zum einen auch denkbar ist, alleine mit der Nonce der Steuereinrichtung 5 zu arbeiten, zum anderen aber auch die Eingabevorrichtung 3 mit hinreichender Eigenintelligenz ausgestattet werden kann, beispielsweise einem Zufallszahlengenerator, um insbesondere selbst eine Nonce zu erzeugen. Dann sind auch andere grundsätzlich bekannte Authentifizierungsvorgänge nutzbar.

Gemäß den Pfeilen 39 und 40 werden die Nonce und der Zählerstand des Monotonzählers dann genutzt, um den Sessionkey zu ermitteln.

Danach wird gemäß dem Pfeil 15 zunächst wenigstens der Sessionkey genutzt, um als Signatur für die Authentifizierung eine HMAC (Keyed-Hash Message Authentication Code) erzeugen. Auch wenn die HMAC nicht unmittelbar versendet wird, ist dies zweckmäßig, da dann die entsprechende Rechenleistung nicht zu einem späteren Zeitpunkt benötigt wird.

Gemäß dem Pfeil 16 werden dann, bevorzugt ebenso den Schlüssel, die Nonce und gegebenenfalls den Startzählerstand nutzend, eine bestimmte Anzahl von Verschlüsselungsdatenelementen eines Schlüsselstroms als Vorausberechnungssatz von Verschlüsselungsdatenelementen berechnet, wobei die entsprechenden Entschlüsselungsdatenelemente gemäß dem Pfeil 17 in einem eigenen Schlüsselstrom gegebenenfalls bereits in der Steuereinrichtung 5 vorausberechnet werden können. Nachdem in den vorliegenden Ausführungsbeispielen die besonders einfach umzusetzende XOR-Operation als Verknüpfungsoperation genutzt werden wird, entsprechen sich Verschlüsselungsdatenelement und Entschlüsselungsdatenelement.

Gemäß dem Pfeil 18 kann dann optional eine Bestätigungsnachricht von der Eingabevorrichtung 3 an die Steuereinrichtung 5 gesendet werden, die, ebenfalls optional, bereits die HMAC enthalten kann ("nonce ready"). Die Initialisierung ist somit abgeschlossen.

Zu einem späteren Zeitpunkt erzeugt das Anwendungsprogramm 19 einen Aufruf einer Sicherheitsfunktion, vgl. Pfeil 20, was in der Steuereinrichtung 5 gemäß dem Schritt S2 das Aussenden einer Umschaltnachricht gemäß dem Pfeil 21 auslöst. In der Steuereinheit 10 wird auf den Verschlüsselungsmodus umgeschaltet und dies gemäß einer Bestätigungsnachricht (Pfeil 22) bestätigt, die bevorzugt die HMAC enthalten kann, insbesondere, wenn dies die Bestätigungsnachricht gemäß dem Pfeil 18 nicht getan hat. Es sei angemerkt, dass die Initialisierungsnachricht gemäß dem Pfeil 14 und die Umschaltnachricht gemäß dem Pfeil 21 auch wiederholt gesendet werden können, insbesondere, wenn entsprechende Betätigungsnachrichten gemäß den Pfeilen 18, 22 zunächst ausbleiben, um eine höhere Robustheit des Verfahrens zu erreichen. Ferner sei darauf hingewiesen, dass zwischen der Detektion des Aufrufs der Sicherheitsfunktion (Pfeil 22) und dem tatsächlichen Umschalten nebst der Bestätigung, Pfeil 22, wie durch den Kasten 23 angedeutet, durchaus noch Nachrichten mit unverschlüsselten Berührungsdatensätzen entstehen können. Daher wird in der Steuereinrichtung 5, wie durch den Pfeil 24 angedeutet ist, regelmäßig überprüft, ob die Bestätigungsnachricht 22 eingetroffen ist, so dass erst dann eine Darstellung eines Eingabehinweises für die sensitive Eingabeinformation mittels der Videoverbindung 8 auf der Eingabevorrichtung 3 beziehungsweise einer zugeordneten Anzeigevorrichtung erfolgt, wenn die Verschlüsselung aktiviert ist. Dabei authentifiziert bevorzugt der mitübersendete HMAC die Nachricht 22, so dass deren Ursprung eindeutig ist. Eine weitere Bedingung, die überprüft wird, ist die erfolgte erfolgreiche Authentifizierung über die Videoverbindung 8.

Es sei angemerkt, dass die Initialisierungsphase mit der Vorausberechnung des Schlüsselstroms nicht zwangsläufig in allen Ausführungsbeispielen vor dem Aufruf der Sicherheitsfunktion erfolgen muss, sondern dies auch danach denkbar ist, wobei es auch dann zweckmäßig sein kann, die Darstellung des Eingabehinweises zu unterdrücken, bis die Vorausberechnung abgeschlossen ist, und danach die Verschlüsselung aktiviert wird. Ferner wird darauf hingewiesen, dass die entsprechenden Nachrichten (Initialisierungsnachricht, Umschaltnachricht, Bestätigungsnachricht) sowie auch weitere, noch zu nennende Nachrichten selbstverständlich auch über weitere Sicherheitsmaßnahmen abgesichert werden können, beispielsweise durch zusätzliche Challange-Respons-Parameter, falls ein Angriff zu befürchten steht.

Ferner sei an dieser Stelle angemerkt, dass die Länge des Schlüsselstroms, also die Anzahl an Verschlüsselungsdatenelementen in dem Vorausberechnungssatz, abhängig von der Größe des Speichermittels 12 beziehungsweise der in der Steuereinheit 10 vorhandenen Rechenleistung gewählt werden kann. Hieraus ergibt sich, ob eine möglichst wenig Verzögerung bedingende Nachberechnung beziehungsweise Parallelberechnung von Verschlüsselungsdatenelementen erfolgen kann oder muss. Es wird darauf hingewiesen, dass, wie bei der Stromverschlüsselung üblich, selbstverständlich für jeden Berührungsdatensatz ein neues Verschlüsselungsdatenelement verwendet wird; die sich ergebenden Ausgestaltungen hinsichtlich der Synchronisierung von Verschlüsselung und Entschlüsselung werden im weiteren noch näher erläutert.

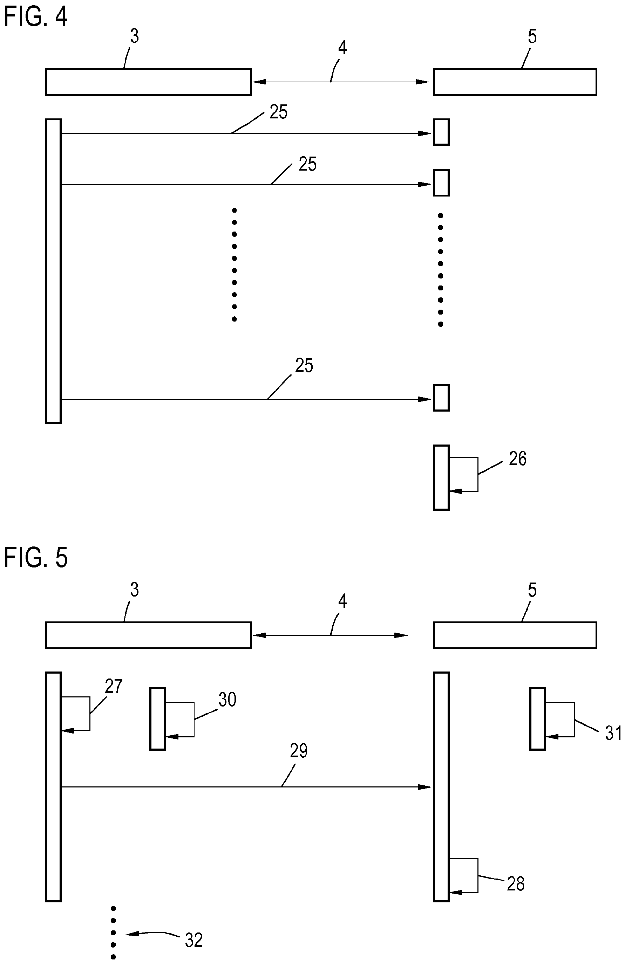

Fig. 4 zeigt nun zunächst einen anderen, insbesondere bei stark beschränkter Nachrichtengröße über die Busverbindung 4 nutzbaren Ansatz, beispielsweise bei einem CAN-Bus, um die bzw. eine HMAC zu übermitteln. Dabei wird die HMAC in N Teile segmentiert und N Nachrichten, die auch einen verschlüsselten Berührungsdatensatz enthalten, hinzugefügt, wie durch die verschiedenen Pfeile 25 angedeutet. Erst wenn die HMAC vollständig erhalten wurde, findet seitens der Steuereinrichtung 5 deren Überprüfung gemäß dem Pfeil 26 statt. Beispielsweise bei Verwendung eines CAN-Busses statt eines CAN-FD-Busses kann eine derartige Variante in Betracht gezogen werden. Liegen nicht genügend Berührungsereignisse vor, können Leernachrichten ohne Berührungsdatensatz zur Vervollständigung der HMAC verwendet werden. Auf diese Weise wird der Nachrichtenblock der Pfeile 25 signiert, der zuvor übermittelt wurde und nun im Nachgang signiert wird.

Im Verschlüsselungsmodus werden auch allgemein Nachrichten mit verschlüsselten Berührungsdatensätzen von der Eingabevorrichtung 3 an die Steuereinrichtung 5 über die Busverbindung 4 derart gesendet, dass die Reihenfolge erhalten bleibt, mithin die korrekten Entschlüsselungsdatenelemente zugeordnet werden. Die Verschlüsselung seitens der Steuereinheit 10 erfolgt dabei über eine einfache XOR-Operation als Verknüpfungsoperation in Echtzeit und die Größe des Berührungsdatensatzes erhaltend, welche beispielsweise 4 Byte betragen kann. Sowohl seitens der Eingabevorrichtung 3 als auch seitens der Steuereinrichtung 5 wird ein Zähler geführt, der zur weiteren Erhöhung der Robustheit dient. Der aktuelle Zählerstand des Zählers wird zweckmäßig innerhalb der Nachricht mit übermittelt, wenn diese genügend Raum bieten; so weiß die Steuereinrichtung 5 auch bei verlorengegangenen Nachrichten, welches Entschlüsselungsdatenelement anzuwenden ist. Zur weiteren Erhöhung der Robustheit kann die Steuereinrichtung 5, insbesondere, wenn der Zählerstand nicht übertragen wird, auch eine Entschlüsselung für höhere, künftige Zählerstände durchführen, wenn eine Entschlüsselung fehlschlägt.

Besonders bevorzugt erfolgt die Entschlüsselung in der Steuereinrichtung 5 ebenfalls in Echtzeit, im vorliegenden Beispiel mittels der XOR-Operation, die über eine entsprechende Entschlüsselungseinheit realisiert sein kann (vergleiche Verschlüsselungseinheit 11).

Während oder mit den Nachrichten der verschlüsselten Berührungsdatensätze beziehungsweise mit noch zu diskutierenden Synchronisierungsnachrichten übersendete HMACs können ferner auch den Zählerstand zur Erzeugung der Signatur mit einbeziehen, um die Sicherheit weiter zu erhöhen.

Fig. 5 erläutert einen Fall, in dem die Zahl der Verschlüsselungsdatenelemente in den Vorausberechnungssatz eher klein gewählt ist. Dann kann beispielsweise das Speichermittel 12 kleiner dimensioniert sein. Dann werden zunächst seitens der Eingabevorrichtung 3 und der Steuereinrichtung 5 bereits vorausberechnete Verschlüsselungsdatenelemente beziehungsweise Entschlüsselungsdatenelemente gemäß den Pfeilen 27 und 28 zur Verschlüsselung beziehungsweise Entschlüsselung genutzt, wobei die Übertragung entsprechender Nachrichten durch den Pfeil 29 erläutert ist. Parallel wird bei beiden Kommunikationspartnern, Pfeil 30 und Pfeil 31, der nächste Satz der vorbestimmten Zahl an Verschlüsselungsdatenelementen vorausberechnet und somit vorbereitet. Der bereits vorliegende Vorausberechnungssatz wird gemäß der Fortsetzungszeichen 32 aufgebraucht, woraufhin dann der gemäß der Pfeile 30 und 31 verwendete Vorausberechnungssatz eingesetzt wird und ein weiterer neuer Vorausberechnungssatz parallel erzeugt wird. Seitens der Steuereinheit 10 wird dann eine größere Rechenleistung benötigt, aber weniger Speicherplatz im Speichermittel 12.

Es sei an dieser Stelle noch angemerkt, dass, insbesondere auch bezüglich des Zählers, Nachrichten mit verschlüsselten Berührungsdatensätzen in bevorzugten Ausführungsbeispielen durch die Steuereinrichtung 5 sofort erkennbar sind. Dazu wird vorliegend zur Übersendung der verschlüsselten Berührungsdatensätze ein anderer Nachrichtentyp verwendet als zur Übersendung der unverschlüsselten Nachrichtendatensätze. Alternativ ist auch die Nutzung eines dedizierten Verschlüsselungsbits in den Nachrichten denkbar.

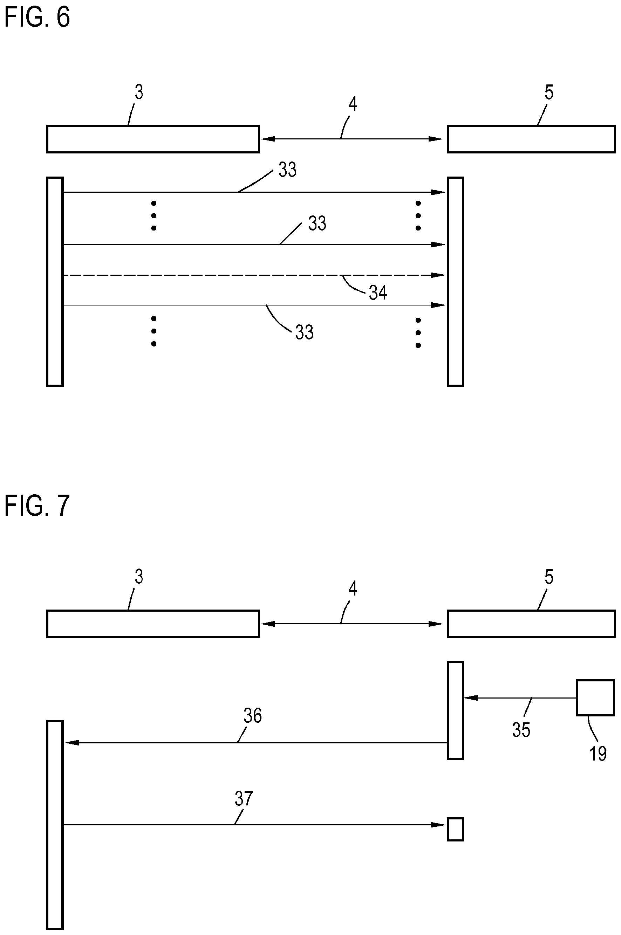

Fig. 6 erläutert den Einsatz von Synchronisierungsnachrichten. Dabei kann insbesondere vorgesehen sein, dass jeweils bei bestimmten Zählerständen zwischen den durch Pfeile 33 angedeuteten üblichen, verschlüsselte Berührungsdatensätze enthaltende Nachrichten eine Synchronisierungsnachricht gemäß dem Pfeil 34 gesendet wird, um die Übereinstimmung der Zählerstände zu sichern beziehungsweise wieder herzustellen. Bei einem einen Wertebereich zyklisch durchlaufenden Zähler kann beispielsweise jeder Reset des Zählerstandes zu einer Synchronisierungsnachricht führen; denkbar ist es auch, Synchronisierungsnachrichten jeweils nach Aufbrauch eines Vorausberechnungssatzes von Verschlüsselungsdatenelementen zu senden.

Fig. 7 erläutert schließlich die Beendigung des Verschlüsselungsmodus. Wird von dem Anwendungsprogramm 19 gemäß dem Pfeil 35 die Information erhalten, dass die Eingabe der sensitiven Eingabeinformation abgeschlossen ist, erzeugt die Steuereinrichtung 5 ein Umschaltsignal gemäß dem Pfeil 36 und sendet es an die Eingabevorrichtung 3. Das Umschaltsignal gemäß dem Pfeil 36 unterschiedet sich dabei von dem Umschaltsignal gemäß dem Pfeil 21 (vgl. Fig. 3). Die Verschlüsselung wird dann in der Eingabevorrichtung 3 deaktiviert und es wird ein entsprechendes Bestätigungssignal gemäß dem Pfeil 37 zurückübermittelt. Das Bestätigungssignal 37 setzt wiederum zur Authentifizierung eine Signatur, beispielsweise die gegebenenfalls aktuelle HMAC. Wie bereits bezüglich Fig. 3 dargelegt wurde, gilt auch hier zweckmäßigerweise, dass die HMAC bevorzugt bereits in der Initialisierungsphase vorausberechnet wurde, um ein möglichst schnelles Umschalten zu begünstigen.

Dabei sei noch angemerkt, dass der vorliegend als Nonce vorliegende Sessionschlüssel für jede Verschlüsselungsphase neu gewählt werden kann. Dann kann sich an das hier gezeigte Deaktivieren des Verschlüsselungsmodus wieder eine Initialisierungsphase, wie sie im Hinblick auf Fig. 3 beschrieben wurde, anschließen. Dabei ist es besonders bevorzugt, wenn sich eine solche neue Initialisierungsphase unmittelbar an das Deaktivieren der Verschlüsselungsphase anschließt. Beispielsweise kann also die Steuereinrichtung 5, sobald das Bestätigungssignal gemäß dem Pfeil 37 eintrifft, eine neue Nonce gemäß dem Pfeil 13 generieren.

## Patentansprüche

1. Verfahren zum Betrieb wenigstens einer berührungssensitiven, flächigen Eingabevorrichtung (3) einer Gesamtvorrichtung (1), wobei die Eingabevorrichtung (3) über eine nachrichtenbasierte Busverbindung (4) mit einer Steuereinrichtung (5) der Gesamtvorrichtung (1) verbunden ist und Berührungsereignisse beschreibende Berührungsdatensätze enthaltende Nachrichten an die Steuereinrichtung (5) übermittelt, welche diese zu einer Eingabeinformation für ein mittels der Steuereinrichtung (5) umgesetztes Anwendungsprogramm (19) auswertet,
wobei bei Aufruf einer eine sensitive Eingabeinformation abfragenden Sicherheitsfunktion in der Steuereinrichtung (5) die Berührungsdatensätze bis zum Abschluss des zugehörigen Eingabevorgangs verschlüsselt über die Busverbindung (4) von der Eingabevorrichtung (3) an die Steuereinrichtung (5) übertragen werden,
**dadurch gekennzeichnet, dass**
- mehrere zur eingabevorrichtungsseitigen Verschlüsselung herangezogene Verschlüsselungsdatenelemente, deren zugeordnetes zur Entschlüsselung zu verwendendes Entschlüsselungsdatenelement aufgrund einer geteilten Basisinformation in der Steuereinrichtung (5) ermittelt wird, als ein Vorausberechnungsdatensatz, insbesondere ein Schlüsselstrom, in der Eingabevorrichtung (3) vorausberechnet und vorgehalten werden, bis sie zur Verschlüsselung verwendet werden, wobei für jeden Berührungsdatensatz ein neues Verschlüsselungsdatenelement verwendet wird, und/oder
- bei Detektion eines Fehlers im Rahmen der Verschlüsselung durch die Steuereinrichtung (5) eine Warnausgabe über wenigstens ein von der Eingabevorrichtung (3) unabhängiges, von einer Aftermarketvorrichtung (9) nicht ansprechbares, Ausgabemittel (6, 7) erfolgt.

2. Verfahren nach Anspruch 1,
**dadurch gekennzeichnet,**
**dass** als Eingabevorrichtung (3) ein Touchpad und/oder ein Touchscreen verwendet wird und/oder dass die Gesamtvorrichtung (1) ein Kraftfahrzeug (2) ist.

3. Verfahren nach Anspruch 1 oder 2,
**dadurch gekennzeichnet,**
**dass** zum Umschalten auf verschlüsselte Berührungsdatensätze und zum Rückschalten auf nichtverschlüsselte Berührungsdatensätze eine Umschaltnachricht in Abhängigkeit von einer Funktionsinformation des Anwendungsprogramms (19) von der Steuereinrichtung (5) an die Eingabevorrichtung (3) übermittelt wird.

4. Verfahren nach einem der vorangehenden Ansprüche,
**dadurch gekennzeichnet,**
**dass** verschlüsselte Berührungsdatensätze enthaltende Nachrichten durch ein gesetztes Verschlüsselungsbit gekennzeichnet werden und/oder zur Übersendung von verschlüsselte Berührungsdatensätze enthaltenden Nachrichten ein anderer Nachrichtentyp als zur Übersendung von unverschlüsselte Berührungsdatensätze enthaltenden Nachrichten verwendet wird.

5. Verfahren nach einem der vorangehenden Ansprüche,
**dadurch gekennzeichnet,**
**dass** die Verschlüsselung, insbesondere auch die Entschlüsselung, der Berührungsdatensätze durch eine insbesondere in Echtzeit durchführbare und/oder die Größe des Berührungsdatensatzes erhaltende Verknüpfungsoperation, insbesondere eine XOR-Operation, erfolgt.

6. Verfahren nach einem der vorangehenden Ansprüche,
**dadurch gekennzeichnet,**
**dass** zur Zuordnung eines Entschlüsselungsdatenelements zu einem verschlüsselten Berührungsdatensatz wenigstens ein Zähler verwendet wird, wobei der Zähler sowohl eingabevorrichtungsseitig als auch steuereinrichtungsseitig geführt wird und/oder als Teil einer auch wenigstens einen verschlüsselten Berührungsdatensatz enthaltenden Nachricht von der Eingabevorrichtung (3) an die Steuereinrichtung (5) übermittelt wird.

7. Verfahren nach Anspruch 6,
**dadurch gekennzeichnet,**
**dass** zur Synchronisierung des oder wenigstens eines des wenigstens einen Zählers bei wenigstens einem Zählerstand eine Synchronisierungsnachricht von der Eingabevorrichtung (3) an die Steuereinrichtung (5) übermittelt wird.

8. Verfahren nach Anspruch 6 oder 7,
**dadurch gekennzeichnet,**
**dass** seitens der Steuereinrichtung (5) bei Fehlschlag einer Entschlüsselung die Entschlüsselung für wenigstens einen zukünftigen Zählerstand des wenigstens einen Zählers erneut versucht wird.

9. Verfahren nach einem der vorangehenden Ansprüche,
**dadurch gekennzeichnet,**
**dass** die Verschlüsselung der Berührungsdatensätze unter Verwendung einer vorgegebenen asymmetrischen oder symmetrischen Schlüsselpaares, das in der Eingabevorrichtung (3) und in der Steuereinrichtung (5) gespeichert ist, und/oder eines für eine Verschlüsselungsphase oder einen Aktivitätszeitraum ausgehandelten Sessionschlüssels, welcher insbesondere in Abhängigkeit von dem Schlüsselpaar ermittelt wird, erfolgt.

10. Verfahren nach einem der vorangehenden Ansprüche,
**dadurch gekennzeichnet,**
**dass** wenigstens ein Teil des Nachrichtenaustauschs zwischen der Eingabevorrichtung (3) und der Steuereinrichtung (5) unter Verwendung eines Authentifizierungsverfahrens erfolgt, insbesondere auf Grundlage einer geteilten Basisinformation.

11. Verfahren nach Anspruch 10,
**dadurch gekennzeichnet,**
**dass** eine von der Eingabevorrichtung (3) erstellte Signatur wenigstens teilweise in auch verschlüsselte Berührungsdatensätze enthaltenden Nachrichten übermittelt wird.

12. Verfahren nach einem der vorangehenden Ansprüche,
**dadurch gekennzeichnet,**
**dass** die Berührungsereignisse eine handschriftliche Eingabe beschreiben und/oder die Berührungsdatensätze jeweils Berührkoordinaten für einen Finger enthalten.

13. Verfahren nach einem der vorangehenden Ansprüche,
**dadurch gekennzeichnet,**
**dass** entlang der Busverbindung (4) eine Zwischenschaltung einer nicht vom Hersteller der Gesamtvorrichtung (1) stammenden Aftermarketvorrichtung (9) ermöglicht wird und/oder als Busverbindung (4) eine CAN-Verbindung oder eine CAN-FD-Verbindung verwendet wird.

14. Gesamtvorrichtung (1), insbesondere Kraftfahrzeug (1), aufweisend wenigstens eine berührungssensitive, flächige Eingabevorrichtung (3) und eine Steuereinrichtung (5), wobei die Eingabevorrichtung (3) über eine nachrichtenbasierte Busverbindung (4) mit der Steuereinrichtung (5) verbunden ist und eine Steuereinheit (10) aufweist, wobei ein durch die die Steuereinheit (10) und die Steuereinrichtung (5) gebildetes Steuermittel zur Durchführung eines Verfahrens nach einem der vorangehenden Ansprüche ausgebildet sind.

## Claims

1. Method for operating at least one touch-sensitive, planar input device (3) of a complete device (1), wherein the input device (3) is connected via a message-based bus connection (4) to a control device (5) of the complete device (1) and messages containing contact data sets describing contact events are transmitted to the control device (5), which evaluates them for input information for an application program (19) implemented by means of the control device (5),
wherein when a security function requesting sensitive input information is called up in the control device (5), the contact data sets are encrypted and transmitted from the input device (3) to the control device (5) via the bus connection (4) until the associated input process is completed,
**characterised in that**
- several encryption data elements used for the encryption on the input device side, the assigned decryption data element of which to be used for the decryption is determined on the basis of a shared basic information in the control device (5), are precalculated and held in the input device (3) as a pre-calculation data set, in particular, a keystream, until they are used for the encryption, wherein a new encryption data element is used for each contact data set, and/or
- when an error is detected in the course of the encryption by the control device (5), a warning output is issued via at least one output means (6, 7) that is independent of the input device (3) and cannot be addressed by an aftermarket device (9).

2. Method according to claim 1,
**characterised in that**
a touchpad and/or a touch screen is used as input device (3) and/or that the complete device (1) is a motor vehicle (2).

3. Method according to claim 1 or 2,
**characterised in that**
in order to switch-over to encrypted contact data sets and to switch-back to non-encrypted contact data sets, a switch-over message is transmitted from the control device (5) to the input device (3) as a function of function information of the application program (19).

4. Method according to any one of the preceding claims,
**characterised in that**
messages containing encrypted data sets are identified by a set encryption bit and/or a different message type is used for sending messages containing encrypted contact data sets than for sending messages containing unencrypted contact data sets.

5. Method according to any one of the preceding claims,
**characterised in that**
the encryption, in particular, also the decryption, of contact data sets is carried out by a link operation, in particular, an XOR operation, that can be carried out in particular in real time and/or that maintains the size of the contact data set.

6. Method according to any one of the preceding claims,
**characterised in that**
at least one counter is used for assigning a decryption data element to an encrypted contact data set, wherein the counter is operated both on the input device side as well as on the control device side and/or is transmitted from the input device (3) to the control device (5) as part of a message also containing at least one encrypted contact data set.

7. Method according to claim 6,
**characterised in that**
in order to synchronise the or at least one of the at least one counter with the at least one counter reading, a synchronisation message is transmitted from the input device (3) to the control device (5).

8. Method according to claim 6 or 7,
**characterised in that**
if a decryption fails, the control device (5) attempts again to decrypt at least one future counter reading of the at least one counter.

9. Method according to any one of the preceding claims,
**characterised in that**
the encryption of the contact data sets is carried out using a predetermined asymmetrical or symmetrical key pair, which is stored in the input device (3) and in the control device (5), and/or a session key negotiated for an encryption phase or for an activity time period, which is determined, in particular, depending on the key pair.

10. Method according to any one of the preceding claims,
**characterised in that**
at least one part of the message exchange between the input device (3) and the control device (5) is carried out using an authorisation method, in particular, on the basis of shared basic information.

11. Method according to claim 10,
**characterised in that**
a signature created by the input device (3) is transmitted at least partially in messages also containing encrypted contact data sets.

12. Method according to any one of the preceding claims,
**characterised in that**
the contact events describe a handwritten input and/or the contact data sets in each case contain contact coordinates for a finger.

13. Method according to any one of the preceding claims,
**characterised in that**
an interposition of an aftermarket device (9), which does not originate from the manufacturer of the complete device (1), is made possible along the bus connection (4) and/or a CAN connection or a CAN-FD connection is used as bus connection (4).

14. Complete device (1), in particular, motor vehicle (1), having at least one touch-sensitive, planar input device (3) and a control device (5), wherein the input device (3) is connected via a message-based bus connection (4) to the control device (5) and has a control unit (10), wherein a control means formed by the control unit (10) and the control device (5) is designed for implementing a method according to any one of the preceding claims.

## Revendications

1. Procédé pour faire fonctionner au moins un dispositif de saisie (3) plat sensible au toucher d'un dispositif global (1), dans lequel le dispositif de saisie (3) est connecté par une connexion de bus (4) basée sur des messages à un dispositif de commande (5) du dispositif global (1) et transmet des messages contenant des jeux de données de contact décrivant des événements de contact au dispositif de commande (5), qui évalue ces messages pour une information de saisie pour un programme d'application (19) mis en œuvre au moyen du dispositif de commande (5),
dans lequel, lorsqu'une fonction de sécurité qui interroge une information de saisie sensible est appelée dans le dispositif de commande (5), les jeux de données de contact sont transmis sous forme chiffrée par l'intermédiaire de la connexion de bus (4) du dispositif de commande (3) au dispositif de commande (5) jusqu'à ce que le processus de saisie associé soit terminé,
**caractérisé en ce que**
- plusieurs éléments de données de chiffrement utilisés pour le chiffrement côté dispositif de saisie, dont l'élément de données de déchiffrement à utiliser pour le déchiffrement est déterminé dans le dispositif de commande (5) sur la base d'une information de base partagée, sont précalculés dans le dispositif de saisie (3) sous forme d'un jeu de données de précalcul, en particulier un flux clé, et sont retenus jusqu'à leur utilisation pour le chiffrement, dans lequel un nouvel élément de données de chiffrement est utilisé pour chaque jeu de données de contact, et/ou
- lors de la détection d'une erreur dans le cadre du chiffrement par le dispositif de commande (5), un avertissement est émis par au moins un moyen de sortie (6, 7) indépendant du dispositif de saisie (3) et non contactable par un dispositif de marché secondaire (9).

2. Procédé selon la revendication 1,
**caractérisé en ce**
**qu'**un clavier tactile et/ou un écran tactile est utilisé comme dispositif de saisie (3) et/ou **en ce que** le dispositif global (1) est un véhicule automobile (2).

3. Procédé selon la revendication 1 ou 2,
**caractérisé en ce**
**que**, pour passer à des jeux de données de contact chiffrés et pour repasser à des jeux de données de contact non chiffrés, un message de commutation est transmis du dispositif de commande (5) au dispositif de saisie (3) en fonction d'une information fonctionnelle du programme d'application (19).

4. Procédé selon l'une quelconque des revendications précédentes,
caractérisé en ce
en ce que les messages contenant des jeux de données de contact chiffrés sont identifiés par un bit de chiffrement défini et/ou que, pour la transmission de messages contenant des jeux de données de contact chiffrés, un type de message différent que pour la transmission de messages contenant des jeux de données de contact chiffrés est utilisé.

5. Procédé selon l'une quelconque des revendications précédentes,
**caractérisé en ce**
**que** le chiffrement, en particulier également le déchiffrement, des jeux de données de contact s'effectue par une opération de liaison, en particulier une opération XOR, pouvant être effectuée en particulier en temps réel et/ou recevant la taille du jeu de données de contact.

6. Procédé selon l'une quelconque des revendications précédentes,
**caractérisé en ce**
**qu'**au moins un compteur est utilisé pour affecter un élément de données de déchiffrement à un jeu de données de contact chiffré, dans lequel le compteur est guidé aussi bien côté dispositif de saisie que côté dispositif de commande et/ou est transmis du dispositif de saisie (3) au dispositif de commande (5) en tant que partie d'un message contenant également au moins un jeu de données de contact chiffré.

7. Procédé selon la revendication 6,
**caractérisé en ce**
**qu'**un message de synchronisation est transmis du dispositif de saisie (3) au dispositif de commande (5) pour synchroniser le ou au moins un de l'au moins un compteur en cas d'au moins une valeur de compteur.

8. Procédé selon la revendication 6 ou 7,
caractérisé en ce
en ce que le dispositif de commande (5), en cas d'échec du déchiffrement, tente de déchiffrer à nouveau au moins une future valeur de compteur de l'au moins un compteur.

9. Procédé selon l'une quelconque des revendications précédentes,
**caractérisé en ce**
**que** le chiffrement des jeux de données de contact s'effectue à l'aide d'une paire de clés asymétriques ou symétriques prédéterminée qui est enregistrée dans le dispositif de saisie (3) et dans le dispositif de commande (5), et/ou d'une clé de session négociée pour une phase de chiffrement ou une période d'activité, qui est déterminée en particulier en fonction de la paire de clés.

10. Procédé selon l'une quelconque des revendications précédentes,
**caractérisé en ce**
**qu'**au moins une partie de l'échange de messages entre le dispositif de saisie (3) et le dispositif de commande (5) s'effectue selon un procédé d'authentification, en particulier sur la base d'une information de base partagée.

11. Procédé selon la revendication 10,
**caractérisé en ce**
**qu'**une signature créée par le dispositif de saisie (3) est au moins partiellement transmise dans des messages contenant également des jeux de données de contact chiffrés.

12. Procédé selon l'une quelconque des revendications précédentes,
**caractérisé en ce**
**que** les événements de contact décrivent une saisie manuscrite et/ou que les jeux de données de contact contiennent chacun les coordonnées de contact d'un doigt.

13. Procédé selon l'une quelconque des revendications précédentes,
**caractérisé en ce**
**qu'**une interconnexion d'un dispositif de marché secondaire (9) ne provenant pas du fabricant du dispositif global (1) est rendue possible le long de la connexion de bus (4) et/ou une connexion CAN ou une connexion CAN-FD est utilisée comme connexion de bus (4).

14. Dispositif global (1), en particulier véhicule automobile (1), présentant au moins un dispositif de saisie (3) plat sensible au toucher et un dispositif de commande (5), dans lequel le dispositif de saisie (3) est connecté au dispositif de commande (5) par une connexion de bus (4) basée sur des messages et présente une unité de commande (10), dans lequel un moyen de commande formé par l'unité de commande (10) et le dispositif de commande (5) est conçu pour exécuter un procédé selon l'une quelconque des revendications précédentes.
